# EUROPEAN PATENT APPLICATION

(11) **EP 3 471 034 A1**
(43) Date of publication of application: **17.04.2019**
(21) Application number: 17809946.1
(22) Date of filing: 05.04.2017
(51) Int. Cl.: G06Q 10/08, G06Q 30/06

(54) **GOODS SHIPMENT MANAGEMENT SYSTEM AND PROGRAM**

(30) Priority: 09.06.2016 JP 2016115681
(71) Applicant: Fujisawa, Kazunori, Shibuya-ku, Tokyo 150-0046 (JP); Yodobashi Camera Co., Ltd., Shinjuku-ku, Tokyo 169-8585 (JP)
(72) Inventor: FUJISAWA, Kazunori, Shibuya-ku, Tokyo 150-0046 (JP)
(74) Representative: Grünecker Patent- und Rechtsanwälte PartG mbB
(86) International application number: PCT/JP2017/014178
(87) International publication number: WO 2017/212763

(57) **Abstract**

A goods shipment management system that delivers goods to a customer in a short time period is provided. A goods shipment management system includes a management server that manages shipment of goods to a plurality of nearby bases each based in a predetermined area allowing delivery from one or more distribution centers to a customer residence in the predetermined area in a predetermined time period, and shipment of goods from the nearby base to the customer residence, wherein the management server includes a front end for performing an electronic transaction in response to an order from a customer terminal in the customer residence, and the goods shipment management system performs control and management such that certain items of the goods that can be delivered in the predetermined time period from the nearby base to the customer residence in the predetermined area when an order of any item of the goods is placed from the customer terminal via the front end are managed as stock goods and a predetermined number of items of the stock goods are stocked in the nearby base, remaining items of the goods other than the stock goods are managed as non-stock goods, and any item of the non-stock goods is delivered from the distribution center to the customer residence via the nearby base when an order of the item of non-stock goods is placed from the customer terminal via the front end.

## Description

### Technical Field

The present invention broadly relates to a management system that manages shipment of products and goods, and the like and, more specifically, to a goods shipment management system for shipping goods in a short time period in retailing businesses and online shopping businesses.

### Background Art

Conventionally, a technique has been provided that reduces the transport time period by managing the stocks of products and goods, and improves the transport efficiency by optimizing the transport route.

For example, a product shipment management system has been proposed that prevents quantitative variation from occurring in the state of stocks of diversified types of products in a delivery warehouse in each sales area, eliminates product transportation between delivery warehouses as much as possible, and reduces transport means' forwarding time period, thereby improving the transport efficiency (Patent Literature 1).

That is, Patent Literature 1 discloses a product shipment management system including: stock management means; order management means; shipment management means; product allocation/assignment means; terminal apparatuses provided for respective dealers; and a communication line that connects the apparatuses, wherein a plurality of delivery warehouses are provided, the delivery warehouses being provided for respective areas of the dealers selling various types of products, the various types of products make-to-stock-produced in a production factory are conveyed into each of the delivery warehouses, a stock state of the products conveyed into each of the warehouses is stored in the stock management means, when the dealer transmits a product order based on an order placed by a customer to the order management means, the product allocation/assignment means allocates a type of stocked product according to the order in conformity with the stock state stored in the stock management means, and the shipment management means updates content of the stock management means, and wherein the product allocation/assignment means checks whether or not the product ordered by the customer is present in the stock state stored in the stock management means, and allocates the stocked product to the order by the customer if the stocked product stocked for a period longer than a predetermined period is present, but sorts, with respect to the stock time period, the stock products that are stored in the stock management means and are present in the delivery warehouse for each area of the dealer having placed the order if the stocked products are absent, and allocates the stocked products having the longest stocked time period to the order placed by the customer.

A merchandize flow control system setting a substantial, optimum transport path from the real-time information about the load of an automatic warehouse, the number of work items in standby, and the share of the transporting facility has also been proposed (Patent Literature 2).

That is, Patent Literature 2 discloses a merchandize flow control system (MCS) for calculating the anticipated transporting time from the starting place to the arriving place and select the optimum transport path, the system including a transport command management part to conduct the management upon receiving the layout information and the real-time working information about the load of the automatic warehouse grouped by unit links and the number of works in standby grouped by unit links, and an optimum path production part which receives the layout information of the transport command management part and the real-time working information in a certain cyclic period and calculates the anticipated transporting time through modeling, and on the basis of the result therefrom, selects the transport path having the minimum anticipated transporting time as the optimum transport path.

Furthermore, a technique of shipment in an estimating manner with respect to a geographical area of a destination by forecasting shipment of a package (Patent Literature 3).

That is, Patent Literature 3 discloses a system including: a company's first computer system configured to identify a destination geographical area to which to ship a package including one or more items destined for eventual shipment to a delivery address; and a second computer system configured to communicate with the first computer system via a network, wherein, subsequent to the package being shipped by a carrier other than the company to the destination geographical area without the delivery address being completely specified at time of shipment, the first computer system is further configured to convey a complete specification of the delivery address to the second computer system, shipment of the package includes providing the carrier with a contract work physically for the package, and wherein, in response to receiving the complete specification of said delivery address, the second computer system is further configured to assign the delivery address to the package, and the package to be shipped without complete specification of the delivery address at the time of shipment occurs in a manner incapable of being delivered to any delivery address at the time of shipment, and, as a result of the complete specification of the delivery address, the package is allowed to be delivered to the delivery address by the carrier.

### Citation List

### Patent Literature

Patent Literature 1: Japanese Patent Laid-Open No. 2004-299861
Patent Literature 2: Japanese Patent Laid-Open No. 2004-244217
Patent Literature 3: Japanese Patent No. 4938682

### Summary of Invention

### Technical Problem

However, in recent online shopping businesses, the competition between short-time delivery services is activated. Further system improvement for delivering goods in a short time period is required. The lines of goods in online shopping businesses widely range from major appliances to daily commodities. Further improvement is expected on a goods shipment management system and the like, in view of presentation of categorized goods in consideration of categories of goods.

### Solution to Problem

A goods shipment management system according to one embodiment of the present invention is a goods shipment management system including a management server that manages shipment of goods to a plurality of nearby bases each based in a predetermined area allowing delivery from one or more distribution centers to a customer residence in the predetermined area in a predetermined time period, and shipment of goods from the nearby base to the customer residence, wherein the management server includes a front end for performing an electronic transaction of the goods in response to an order from a customer terminal in the customer residence, and the goods shipment management system performs control and management such that certain items of the goods that can be delivered in the predetermined time period from the nearby base to the customer residence in the predetermined area when an order of any item of the goods is placed from the customer terminal via the front end are managed as stock goods and a predetermined number of items of the stock goods are stocked in the nearby base, remaining items of the goods other than the stock goods are managed as non-stock goods, and any item of the non-stock goods is delivered from the distribution center to the customer residence via the nearby base when an order of the item of non-stock goods is placed from the customer terminal via the front end.

The stock goods are determined by presenting a group of stock candidate goods extracted by the management server to the customer terminal, and by allowing a customer to perform selection and registration through the customer terminal.

### Advantageous Effects of Invention

The goods shipment management system according to one embodiment of the present invention exerts advantageous effects; for example, the system can appropriately manage goods that customers intend to keep always, without lacking available stocks, and deliver such goods to a customer within a short time period after the customer's order.

### Brief Description of Drawings

Figure 1 illustrates facilities, a distribution channel and the like in a goods shipment management system according to one embodiment of the present invention.
Figure 2 illustrates an entire configuration example of the goods shipment management system according to one embodiment of the present invention.
Figure 3 illustrates a functional block configuration of a management server in the goods shipment management system according to one embodiment of the present invention.
Figure 4 illustrates an appearance configuration example of an information processing apparatus (user terminal) in the goods shipment management system according to one embodiment of the present invention.
Figure 5 illustrates a functional block configuration of hardware constituting the information processing apparatus according to one embodiment of the present invention.
Figure 6 is a flowchart illustrating a processing flow in the goods shipment management system according to one embodiment of the present invention.
Figure 7 illustrates an extraction logic creation process concept in the goods shipment management system according to one embodiment of the present invention.
Figure 8 is a flowchart illustrating a flow of a stock goods registration process and update process in the goods shipment management system according to one embodiment of the present invention.
Figure 9 illustrates a display example on the information processing apparatus (user or customer terminal) in the goods shipment management system according to one embodiment of the present invention.
Figure 10 illustrates an analysis and distribution model in the goods shipment management system according to one embodiment of the present invention.
Figure 11 illustrates a data structure, and a display example on the information processing apparatus in the goods shipment management system according to one embodiment of the present invention.
Figure 12 illustrates a display example on the information processing apparatus (user or customer terminal) in the goods shipment management system according to one embodiment of the present invention.
Figure 13 illustrates a display example on the information processing apparatus (user or customer terminal) in the goods shipment management system according to one embodiment of the present invention.
Figure 14 illustrates a display example on the information processing apparatus (user or customer terminal) in the goods shipment management system according to one embodiment of the present invention.
Figure 15 is a flowchart illustrating a processing operation flow in the goods shipment management system according to one embodiment of the present invention.
Figure 16 is a flowchart illustrating a processing operation flow in the goods shipment management system according to one embodiment of the present invention.
Figure 17A illustrates a display example on the information processing apparatus (user or customer terminal) in the goods shipment management system according to another embodiment of the present invention.
Figure 17B illustrates an operation example for the information processing apparatus (user or customer terminal) in the goods shipment management system according to the other embodiment of the present invention.
Figure 17C illustrates a processing operation flow of the information processing apparatus or the like (user or customer terminal) in the goods shipment management system according to the other embodiment of the present invention.
Figure 18 illustrates an operation and a display example for the information processing apparatus (user or customer terminal) in the goods shipment management system according to the other embodiment of the present invention.
Figure 19 illustrates an operation and a display example for the information processing apparatus (user or customer terminal) in the goods shipment management system according to the other embodiment of the present invention.
Figure 20 illustrates an operation and a display example for the information processing apparatus (user or customer terminal) in the goods shipment management system according to the other embodiment of the present invention.
Figure 21 illustrates an operation and a display example for the information processing apparatus (user or customer terminal) in the goods shipment management system according to the other embodiment of the present invention.

### Description of Embodiments

An goods shipment management system according to one embodiment of the present invention and the like are hereinafter described in detail with reference to the drawings.

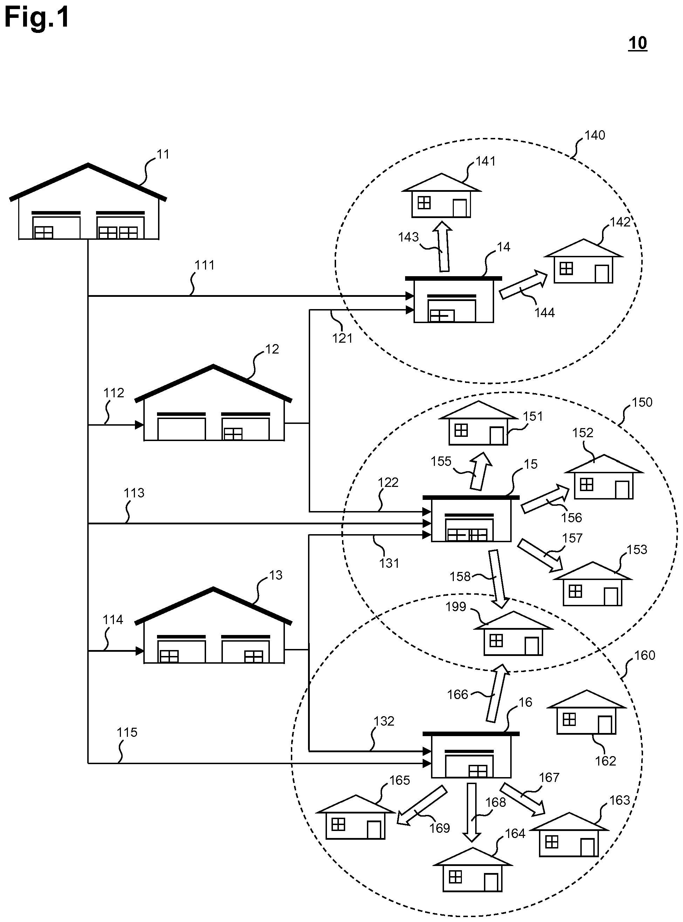

Figure 1 schematically illustrates facilities, a distribution channel and the like in the goods shipment management system according to one embodiment of the present invention. In this diagram, the goods shipment management system 10 in view of the facilities and the distribution channel includes distribution centers 11 to 13, and nearby bases 14 to 16, in a roughly classified manner, and constitutes a part of a large distribution network that delivers goods and the like to customer residences 141 to 142, 151 to 153, 162 to 165 and 199 via routes 143 to 144, 155 to 158 and 166 to 169.

The numbers of distribution centers 11 to 13 and nearby bases 14 to 16 are not limited to these numbers. Any number of centers and any number of bases may be adopted. Hereinafter, to facilitate understanding the present invention, description is made based on the model shown in Figure 1 for the sake of convenience.

### [Basic concept of present invention: distribution centers and nearby bases]

The facilities of the goods shipment management system according to one embodiment of the present invention are characterized by including at least these two types of facilities. According to a basic concept, in addition to conventional distribution centers serving as distribution bases, the nearby bases according to one embodiment of the present invention are provided as geographical bases capable of distribution to customer residences within a predetermined time period.

That is, the nearby bases are delivery bases that are provided for allowing goods and the like to be delivered to customers in a short time period and are characteristic in the present invention. A distribution network provided with the nearby bases constitutes one basic concept of the present invention.

As shown in Figure 1, the individual distribution centers may have roles different from each other. For example, in this diagram, the distribution center 12 delivers goods and the like to the nearby bases 14 and 15 via the routes 121 and 122, and the distribution center 13 delivers goods and the like to the nearby bases 15 and 16 via the routes 131 and 132. Meanwhile, the distribution center 11 delivers the goods and the like to the other distribution centers 12 and 13 via the routes 112 and 114, and further has a role of delivering the goods and the like to the nearby bases 14, 15 and 16 via the routes 111, 113 and 115. For example, to the nearby base 14, goods and the like are usually supplied from the geographically near distribution center 12. However, in a case where the distribution center 12 has no stock, the goods and the like are sometimes supplied from the distribution center to the nearby base 14.

Although not shown in Figure 1, routes for directly delivering goods and the like from the distribution centers 11 to 13 to the customer residences may be provided (since this point is not essential in the present invention, illustration in diagrams is omitted).

In Figure 1, a nearby area 140 indicates an area allowing goods and the like to be delivered from the nearby base 14 within a predetermined time period (e.g., 30 minutes, one hour or the like). This area schematically includes the customer residences 141 and 142.

Likewise, a nearby area 150 indicates an area allowing goods and the like to be delivered from the nearby base 15 within a predetermined time period (e.g., 30 minutes, one hour or the like). This area schematically includes the customer residences 151, 152, 153 and 199. Likewise, a nearby area 160 indicates an area allowing goods and the like to be delivered from the nearby base 16 within a predetermined time period (e.g., 30 minutes, one hour or the like). This area schematically includes the customer residences 162, 163, 164, 165 and 199.

Here, in this diagram, the customer residence 199 is schematically included in both the nearby areas 150 and 160. This indication means that goods and the like can be delivered to the customer residence 199 from the nearby base 15 and also from the nearby base 16 within the predetermined time period (for example, the goods and the like can be delivered from the nearby base 15 to the customer residence 199 in 35 minutes, the goods and the like can be delivered from the nearby base 16 to the customer residence 199 in 40 minutes).

### [Basic concept of present invention: two goods classes]

Another characteristic of the goods shipment management system according to one embodiment of the present invention is that the line of goods includes two classes, or "stock goods" and "non-stock goods". These goods classes are classified according to the degree of usual demand of the customers in the nearby areas of the nearby bases. Goods having high degrees of usual demand of the customers in the nearby areas of the nearby bases are classified as stock goods, and managed so that a certain number of goods can be always stocked in the nearby bases even without orders from customers.

On the other hand, the non-stock goods are delivered from the distribution center to the nearby base upon receipt of an order from a customer, and then delivered to the customer residence in the nearby area (alternatively, sometimes delivered from the distribution center directly to the customer residence).

The "stock goods" and "non-stock goods" are selected on the system for each nearby area according to the degree of usual demand in the nearby area. Consequently, the selection is not uniformly determined according to the goods classification (home appliances, books, cosmetics, etc.). However, in a general tendency, home appliances, such as refrigerators and large-sized televisions, are often classified as non-stock goods, while daily commodities, such as shampoos and toilet paper rolls, are often classified as stock goods. The stock goods geographically and temporally vary according to the areas and situations, such as of annual events and in a period immediately after an earthquake disaster.

Hereinafter, "stock goods" and "non-stock goods" in this Specification are defined.

Stock goods: goods repetitively demanded in a short time period by the customers in the nearby areas. The stock goods include daily commodities and consumables. In one embodiment of the present invention, a predetermined number of stock goods are managed to be always stocked in the nearby bases.

Non-stock goods: goods other than stock goods. The non-stock goods are received from the distribution center when an order is placed from a customer, and include high quality merchandise, such as major appliances and cameras.

### [Distribution management]

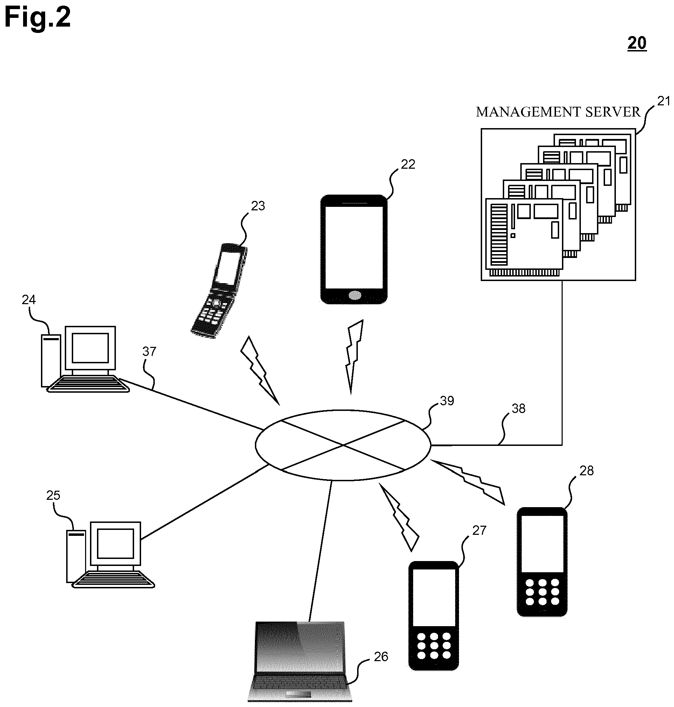

In the above description, the description parts "goods and the like can be delivered ... from the nearby base within a predetermined time period", "in a case where ... no stock" and the like can be determined by the time period (expected time period) required for distribution and delivery and the fact that the number of stocks of goods and the like in the bases is managed on the system. An entire configuration example of the goods shipment management system according to one embodiment of the present invention is described later with reference to Figure 2. For example, a management server in the goods shipment management system according to one embodiment of the present invention is installed in any of the distribution centers and nearby bases in Figure 1, or in a company premise, not shown. This management server is connected to the individual centers and the individual bases through information terminals and a network. The stock situation and the numbers of acceptances and deliveries of goods and the like at each base and the like, and the situations of distribution and delivery between the bases and to destinations are managed from in real time. Furthermore, based on these performances, the distribution and delivery time periods between the bases and to the destinations are calculated, and successively updated and managed.

Consequently, each route in Figure 1 is not always the only route. For example, the route from the distribution center 11 to the nearby base 14 is managed as a route indicated by reference numeral 111, on the system. One or more routes other than this route may be stored and managed as alternative routes. Likewise, the route from the nearby base 14 to the customer residence 141 is managed as a route indicated by reference numeral 143 in this diagram, on the system. One or more alternative routes may be stored and managed.

For example, these alternative routes may be alternatively adopted according to the traffic situation at the time, and instructions may be issued to specific distribution facilities (bases) and distribution means (delivery vehicle).

### [Sales management]

The goods shipment management system according to one embodiment of the present invention also performs sales management of goods and the like. The goods shipment management system according to one embodiment of the present invention also operates in conjunction with store POS register and a teleshopping (electronic transaction) system, and manages the sales performance in the store and the sales performance through teleshopping on a customer-by-customer basis. As databases therefor, the following databases (D1) to (D8) are provided in one embodiment, thereby allowing each terminal to refer thereto and issue an update request.

### (D1) Customer management database

In this database, items pertaining to the customers are registered. Personal information, such as customer names, addresses, and phone numbers, and supplementary information, such as held points, and nearby bases, are registered.

### (D2) Goods management database

In this database, items pertaining to goods are registered. Goods names, goods codes associated with JAN codes, and the like are registered and managed.

### (D3) Stock management database

This database is for managing the stocked goods, appropriately cooperates with the goods management database, and required tables are derived and extracted.

### (D4) Warehouse management database

This database is for managing the stocked goods stored in warehouses of the distribution centers and the like.

### (D5) Sales management database

This database is a performance management database pertaining to goods sold at each base or store.

### (D6) Stock candidate goods database (or table)

This database is derived and extracted from the goods management database and the stock management database. A specific extracted example is described later.

### (D7) Goods-intended-to-be-stocked database (or table)

This database is a goods-intended-to-be-stocked database derived from the goods management database, the stock management database and the customer management database, for each customer and each nearby base. A specific extracted example is described later.

### (D8) Stock goods database (or table) for each nearby base (each customer)

This database is a goods-to-be-stocked database derived from the goods management database, the stock management database and the customer management database, for inventory management of the stock goods for each nearby base. A specific extracted example is described later.

### [Roles of nearby base]

In the goods shipment management system according to one embodiment of the present invention, the nearby base has the following roles (system operations, and operations by operators, such as staff in the base, are collectively listed).
(1) Storing and sorting of target stock goods, and management of updating target stock goods.
(2) Delivery process in a case where an order from a customer in the nearby area for target stock goods is placed (picking up ordered goods, destination labeling).
(3) Temporary storing and delivery to a customer residence in a case where non-stock goods ordered by a customer in the nearby area is reached from a distribution center (typically, the non-stock goods with destination labels being attached are delivered to the nearby base).
(4) Bundling and delivering non-stock goods and stock goods ordered by a customer in the nearby area (in a case of bundling and delivering, the bundling operation and destination labeling operation are performed in the nearby base).
(5) Redelivery in a case where a customer in the nearby area is absent when delivery is made.
(6) Simultaneously delivering stock goods in a case where the stock goods are additionally ordered at the time of (5) redelivery described above.

According to one embodiment of the present invention, delivery from the distribution center to the nearby base is executed as an operation in the same business entity, and no delegation is made to another delivery company. For example, the target goods are delivered several times a day by an intra-business delivery.

Figure 2 illustrates an entire configuration example of the goods shipment management system according to one embodiment of the present invention.

As shown in Figure 2, according to the configuration of one embodiment, the goods shipment management system 20 includes a management server 21, and various information processing apparatuses that the users (customers), deliverers and the like use (in the diagram, mobile information terminals, or a tablet terminal 22, a mobile phone 23, PCs 24 to 26, and POS terminals 27 to 28 are shown as an example; hereinafter, sometimes collectively called "various terminals" or simply called "terminals"). The goods shipment management system 21 and the various terminals are communicably connected to each other via a dedicated line, and a public line, such as the Internet (reference numerals 37 to 39 denote wired lines), as shown in Figure 1. The line may be wired or wireless. In a case of the wireless line, the mobile information terminals, or the tablet terminal 22 and the mobile phone 23, and the POS terminals 27 to 28 are wirelessly connected to the Internet 39 via base stations and access points, not shown, and are further connected to the management server 21 via the line 38 in a mutually communicable manner.

Here, the access point is a wireless device for connecting wireless terminals, such as PCs and smartphones, to each other and to another network. Typically, the device operates according to a communication protocol of the first layer (physical layer) and the second layer (data link layer) in the OSI reference model.

Many mobile phones and mobile information terminals and tablets at the time of this application have processing capabilities comparing favorably to personal computers (PCs) (the communication processing speed, image processing capability, etc.), and are to be regarded as small computers.

Typically, the program and software required to execute the present invention are installed or stored in HDDs, SSDs and the like in storages of PCs and mobile information terminals, are read as a software module that is the entire or a part of the program or software in the memory in the storage as required during execution of the program and software, and are computed and executed by the CPU.

Alternatively, browser-based computers or mobile information terminals may be adopted. In this case, a configuration is adopted where the program is distributed from another server or a computer to the terminals as required and then the browsers on the terminals execute the program.

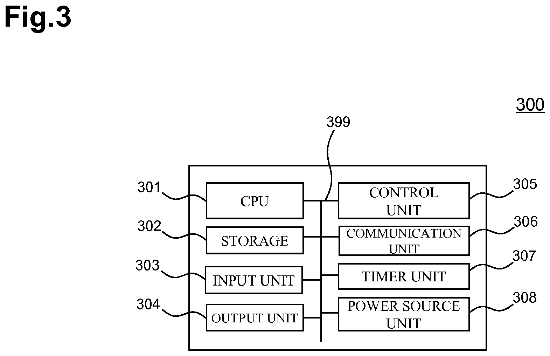

The hardware configuration of the management server 21 may also basically adopt that of a PC (for confirmation, description is made later with reference to Figure 3). Although the present invention is not specifically limited thereto, the management server 21 may have a configuration suitable for large-scale data processing, by means of operating multiple PCs (e.g., several tens to several tens of thousands) in parallel, to improve the hardware specifications as required.

Figure 3 illustrates the functional block configuration of the management server in the goods shipment management system according to one embodiment of the present invention. According to an example, the operation of the management server is achieved by the individual operations of pieces of hardware described later and the cooperation between the software and these pieces of hardware.

In Figure 3, in a roughly classified view, the management server 300 as the overall hardware blocks includes: a CPU 301 for various comparative and operation processes; a RAM; a ROM; a storage 302, such as a flash memory; an input unit 303, such as a keyboard and a pointing device; an output unit 304, such as a display and a speaker; a control unit 305 for controlling various signals; a communication (interface) unit 306 (of any of wireless and wired schemes); a timer unit 307 for obtaining the time; and a power source unit 312.

These modules are appropriately connected to each other by a communication bus and a power supply line (in Figure 3, the lines are collectively shown as an appropriately segmented connection line 399 for the sake of convenience), as required.

Typically, the program and software executed on the management server 300 required to implement the present invention are installed or stored in a hard disk, SSD (Solid State Drive), a flash memory or the like that constitute the storage 302, are read as a software module that is the entire or a part of the program or software in the memory in the storage 302 as required during execution of the program and software, and are computed and executed by the CPU 301.

The computation is not necessarily executed in the central processing unit, such as CPU 301. An auxiliary processor, such as a digital signal processor (DSP), not shown, may be adopted.

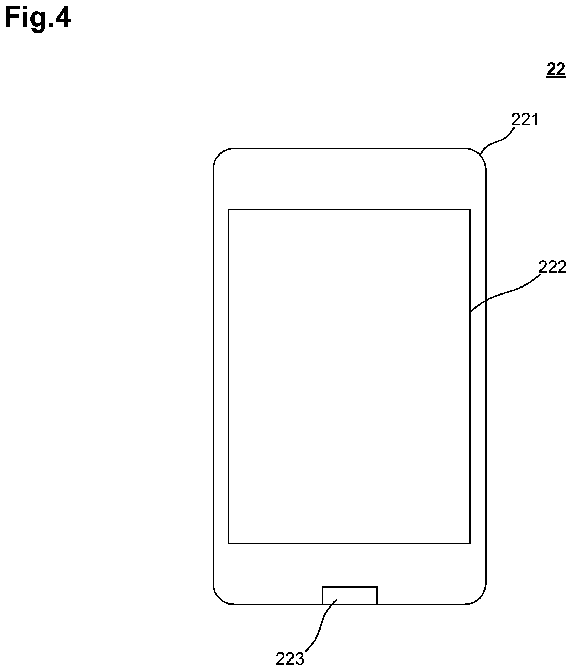

Figure 4 illustrates an appearance configuration of the tablet terminal 22 as an information processing apparatus in the goods shipment management system according to one embodiment of the present invention. In Figure 4, the information processing apparatus (tablet terminal) 22 includes a housing 221, a display 222, and a hardware button 223 provided at the lower center of the housing 221. Typically, the display 222 is made up of a liquid crystal display (LCD) and the like, and can display various pieces of information, such as characters, still images, and moving images. The display 222 is caused to display a menu button, a software keyboard and the like, which are touched with a finger or a stylus pen (not shown), thereby allowing an instruction (command) to be issued to the tablet terminal 22. In this respect, the hardware button 223 is not a necessary configuration element. For the sake of convenience of description of the present invention, this button is implemented as a button having a role of performing a certain function. It is a matter of course that the hardware button 223 can be replaced with a menu button displayed on a part of the display 222.

The display 222 includes a multi-touch input panel. The coordinates of a touch-input position on the touch input panel are transmitted to the processing system (CPU) of the tablet terminal 22 through an input device interface (not shown), and are processed. The multi-touch input panel is configured to be capable of sensing multiple contact points on the panel at the same time. The sensing (sensor) can be achieved through any of various schemes. The scheme is not necessarily limited to the contact sensor. For example, an instruction point to the panel can be extracted using an optical sensor. Besides the contact sensor and the optical sensor, a capacitance sensor that senses a touch with human skin can be used.

Although not shown in Figure 4, the tablet terminal 22 may include a microphone and a speaker. In this case, the voice of the user or the like picked up by the microphone may be determined and adopted as an input command. Although not shown in Figure 4, a camera device, such as of CMOS, may be implemented on the rear surface of the tablet terminal 22.

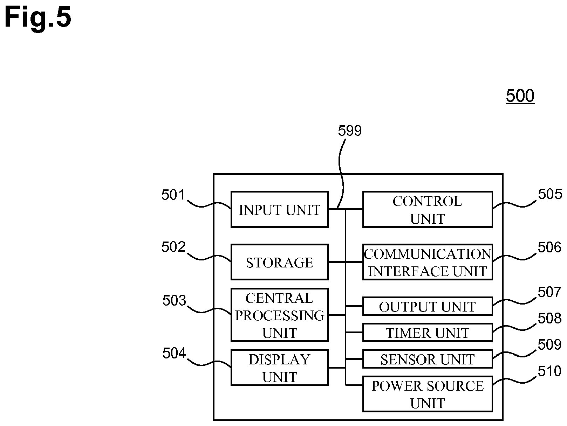

Figure 5 exemplifies a functional block diagram of the hardware constitutes the tablet terminal 22 according to one embodiment of the present invention. The operation of the tablet terminal 22 is achieved by the individual operations of pieces of hardware described later and the cooperation between the software and these pieces of hardware.

In Figure 5, in a roughly classified view, the tablet terminal 500 as the overall hardware blocks includes: an input unit 501 made up of a hardware button 223 as shown in Figure 4, a multi-touch input panel provided on the display 222, a microphone and the like; a storage 502 made up of a hard disk, RAM and/or ROM and the like for storing programs, data and the like; a central processing unit 503 made up of a CPU that performs various numerical calculations and logical computations through the programs; a display unit 504 made up of the display 222 and the like; a control unit 505, such as of a chip, an electric system and the like for performing control; a communication interface unit 506 that includes a slot for accessing the Internet, a port for optical communication, and a communication interface; an output unit 507 that includes a speaker, a vibrator, and an infrared projector; a timer unit 508 for obtaining the time and the like; a sensor unit 509 made up of an image sensor, such as CMOS, an infrared sensor, an inertial sensor and the like; and a power source unit 510 for supplying power to each module in the apparatus. These modules are appropriately connected to each other by a communication bus and a power supply line (in Figure 5, the lines are collectively shown as an appropriately segmented connection line 599 for the sake of convenience), as required.

The sensor unit 509 may include a GPS sensor module for identifying the position of the tablet terminal 500 (22). Signals sensed by the image sensor, such as CMOS, the infrared sensor and the like, which constitute the sensor unit 509, can be processed as input information by the input unit 501.

Typically, the program and software executed on the tablet terminal 500 required to implement the present invention are installed or stored in a hard disk, SSD (Solid State Drive), a flash memory or the like that constitute the storage 502, are read as a software module that is the entire or a part of the program or software in the memory in the storage 502 as required during execution of the program and software, and are computed and executed by the CPU 503.

The computation is not necessarily executed in the central processing unit 503, such as CPU. An auxiliary processor, such as a digital signal processor (DSP), not shown, may be adopted.

### [Determine stock goods to be stocked in nearby base]

The goods shipment management system according to one embodiment of the present invention judges and determines the stock goods that are to be stocked at the nearby bases. The details are herein described.

As described above, the stock goods are selected on the system, for each nearby area, according to the degree of usual demand in the nearby area. More specifically, the selection is made according to the following flow including: (1) stock candidate goods are selected; (2) end-of-production and end-of-sales candidate goods are excluded therefrom; and from the remaining goods, (3-A) the customer's stock registration request is accepted, or (3-B) stock registration is performed according to automatic determination.

In particular, the selection of the stock candidate goods in (1) described above includes (1-A) selection of the stock candidate goods through analyzing sales performance data, and (1-B) selection of the stock candidate goods through goods management information. Hereinafter, the description is sequentially made below.

1-A. Process of selecting stock candidate goods through analyzing sales performance data

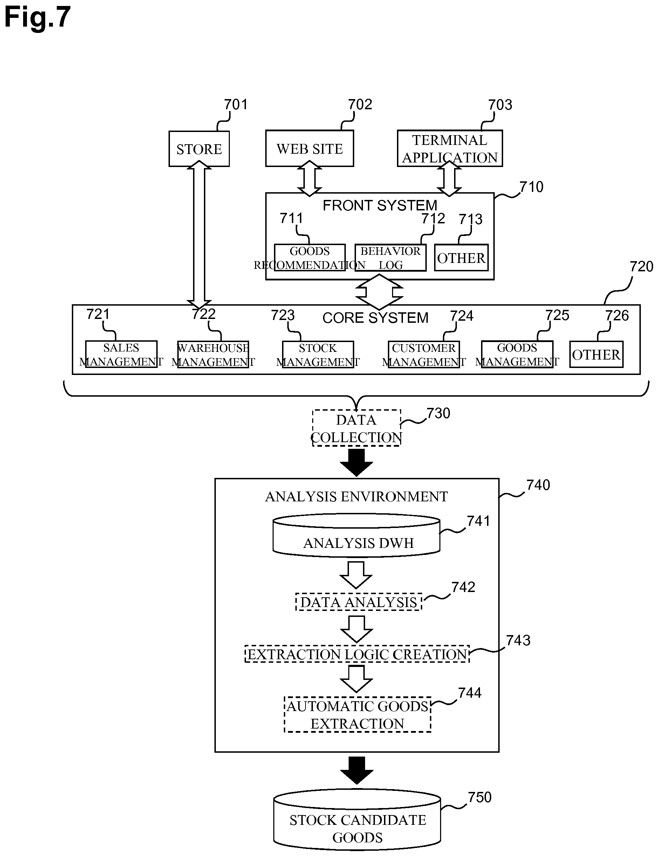

The process of selecting the stock candidate goods analyzes previously accumulated sales performance data (recorded in a sales management DB), sets an automatic extraction logic for extracting goods whose demands by the customers repetitively occur (a certain number of orders from customers are placed in a predetermined period), and selects the candidate goods that are to be stocked at the nearby bases, on the basis of the automatic extraction logic (the extraction logic creation process concept is described later with reference to Figure 7).

### 1-B. Process of selecting stock candidate goods through goods management information

The process of selecting the stock candidate goods is performed by extracting series of books having not been completed, and version-upgraded software products, from among the goods the customer purchased in the past (recorded in the sales management DB). The fact that goods are a part of a series, and the version numbers of goods are recorded in a goods management DB.

### 2. Process of excluding end-of-production and end-of-sales candidate goods

The excluding process is a process for excluding candidate goods whose stock situation is in a state incapable of supplying, such as "end of production" and "end of sales", from the candidate goods. Such information is recorded in the goods management DB on a goods-by-goods basis. The information is updated every time of end of production and end of sales.

It may be controlled such that even though the stock situation of the candidate goods is end of sales or the like, the goods that can be obtained from a manufacturer or the like are not excluded (such information can be managed on a goods-by-goods basis in the goods management DB) .

### 3-A. Customer's own stock registration request accepting process

The accepting process registers stocks by providing the extracted candidate goods information extracted according to the processes to 2 described above on the customer terminal and by allowing the customer to select goods. Typically, the customer selects goods expected by the customer that the goods can be delivered in a short time period (e.g., 30 minutes or one hour) if the goods are ordered, from among the stock candidate goods, through the customer terminal, and registers the selected goods as stocks.

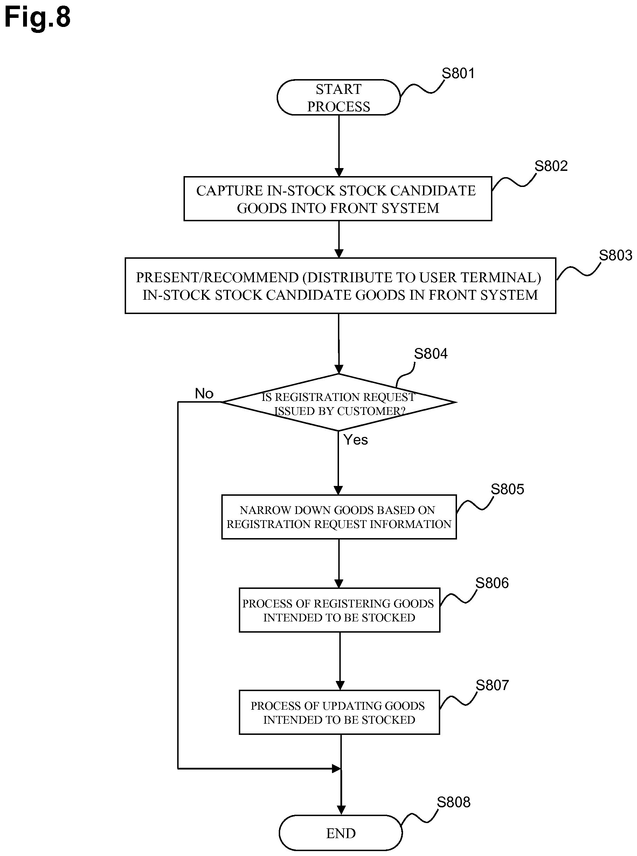

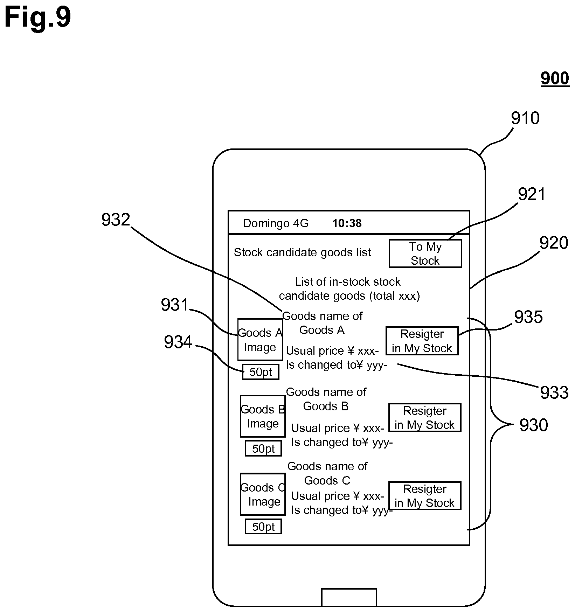

The registration process is further described in detail with reference to Figures 8 and 9. The stocks are registered by registration through the customer terminal. Accordingly, groups of stock goods that are different from each other for the respective nearby areas are formed, and managed by the system.

### 3-B. Stock registration process through automatic determination

The registration process picks up goods in high demand and goods having a high repeat purchase rate in view of an operator of the goods shipment management system, and automatically registers the goods as stock goods, even though no customer performs stock registration. The reference of the degrees of the demand and the repeat purchase rate may be appropriately set by the system operator. The registration process can be flexibly operated such that the process commonly registers goods for all the nearby bases or differently registers for each area or for each nearby area.

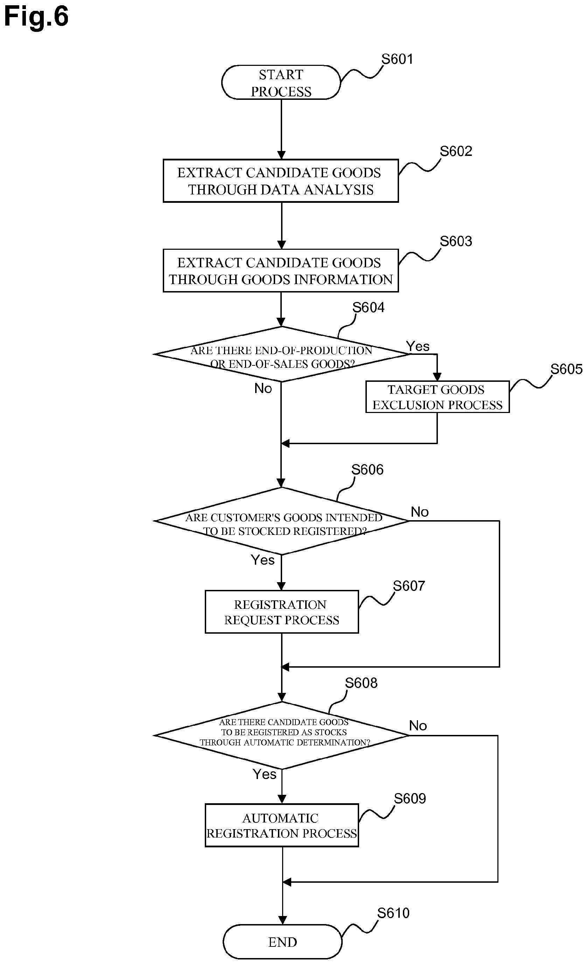

Figure 6 shows the determination process and the registration process for the stock goods to be stocked in the nearby base described above. In step S601, the process is started, and then in step S602, the stock candidate goods are extracted through data analysis. Specifically, the management server 21 refers to the sales management DB or the like and performs the process. Next, the processing proceeds to step S603, in which the stock candidate goods are extracted through the goods information. Specifically, the management server 21 refers to the goods management DB and performs the process.

In step S604, it is determined whether or not the candidate goods extracted in steps S602 and S603 include goods whose production or sales are finished. If Yes, the processing proceeds to step S605, in which the process of excluding the corresponding goods is performed. Specifically, the management server 21 refers to the goods management DB or the like and performs the process. Note that if it is determined that the goods can be obtained from the manufacturer or the like, with reference to flags managed separately in the goods management DB or the like, it can be determined not to exclude the goods (it is determined to be No in step S604) .

In step S606, it is determined whether the customer's registration process for goods intended to be stocked is performed for the stock candidate goods presented on the terminal of the customer. If not, the processing proceeds to step S608. If the registration process for the goods intended to be stocked is performed by the customer (Yes in step S606), the processing proceeds to step S607, in which the stock registration process for the designated stock candidate goods is performed. Specifically, the process is performed, in the management server 21, by updating the goods management DB or the like, or by updating stock goods management tables for the respective nearby bases, the tables having been extracted from the goods management DB.

Next, in step S608, the automatic determination process set in view of the goods shipment management system operator is performed, and it is determined whether there are candidate goods to be registered as stocks with reference to such an automatic determination reference. If YES in step S608, the processing proceeds to step S609, in which the stock registration process for the stock candidate goods satisfying the automatic determination reference is performed. Specifically, the process is performed, in the management server 21, by updating the goods management DB or the like, or by updating stock goods management tables for the respective nearby bases, the tables having been extracted from the goods management DB.

If No in step S608, or after completion of step S609, the processing proceeds to step S610, in which the flow as a flow of the determination process or the registration process for the stock goods to be stocked in the nearby bases is finished.

Figure 7 shows an extraction logic creation process concept for selecting the candidate goods to be stocked in the nearby bases in the goods shipment management system according to one embodiment of the present invention.

The goods shipment management system according to one embodiment of the present invention in Figure 7 is represented in a front system 710, a core system 720, an analysis environment 740, and a stock candidate goods DB and table 750. In this diagram, the core system 720 is accessible from the store (store's POS register) 701, and the front system 710 for a website 702 and a terminal application 703, such as the customer terminal. The store (store's POS register) 701 is for exchanging information on goods sold in an actual store and goods requested to be delivered to the actual store, with the core system 720. The website 702 and the terminal application 703 through the front system 710 are for exchanging information on goods and the like ordered or sold through an electronic transaction via the Internet, with the core system 720.

The front system 710 is a software module that serves as the interfaces of transactions and procedures between the core 720, and the website 702 for the customer terminal and the terminal application 703, such as the customer terminal, in the goods shipment management system according to one embodiment of the present invention, and operates on the management server 21 or another server. The front system 710 includes, as its submodules: a goods recommendation logic 711 that recommends goods for the customer terminal and the like, a behavior log logic 712 that is viewed from the customer terminal and tracks ordered goods and the like, and a logic 713 including another processing system.

The core system 720 includes: a sales management processing system 721 including a sales management DB; a warehouse management processing system 722 including a warehouse management DB; a stock management processing system 723 including a stock management DB; a customer management processing system 724 including a customer management DB; a goods management processing system 725 including a goods management DB; and another processing system 726 including another DB.

In Figure 7, an extraction logic for selecting candidate goods to be stocked in the nearby bases is created in the analysis environment 740 constructed in the goods management server 21, for example. The procedures are as follows. That is, as shown in this diagram, data collection (730) is performed from the core system 720 that is accessed from the store (store's POS register) 701 and from the front system 710 for a website 702 and a terminal application 703, such as the customer terminal, and updates and manages the goods information, sales information and the like, and the data is transmitted to a data warehouse in the analysis environment 740. That is, the process of selecting the stock candidate goods is automatically performed (744) through a goods extraction logic (743) created by collecting customer information, goods information, purchase information (sales information), browsing information and the like, into the analysis data warehouse 741, and by analyzing the accumulated data (742) .

The data analysis 742 performs various data analyses for the data warehouse 741. The present invention is not specifically limited thereto. Typically, the data accumulated in the data warehouse is a large amount of integrated business data arranged in a time series manner, and the relationships between various items are analyzed. For example, the relationships between the elements having not been identified by the conventional simple aggregation are verified from sales data in the store 701; the relationships include "men in 40's and 50's who buy fitness goods often buy related books together" and "daily commodities, such as waterproof spray, sell well the day before a rainy day".

The extraction logic creation process 743 then creates an extraction logic from the following views (A) to (C), as an example.

### (A) Goods repetitively purchased in the past

In this view, goods repetitively purchased in any period can be extracted by aggregating the sales performance on a goods-by-goods basis in the large amount of sales performance data arranged in a time series manner, the customer data and the like, and by performing a ranking process and the like.

The data, such as the sales performance data and the customer data, is subjected to determination; specifically, it is determined that the goods are repetitively purchased goods by judging whether the number of purchases reaches at least a certain frequency in a certain period on the basis of the data, such as goods purchase performance on a customer-by-customer basis in the store and the website executing the electronic transaction, the customer information, and goods information, and it is determined that the goods are those having a repetitive purchase tendency if there is a performance that a certain customer purchases a certain number of goods at a certain frequency in a certain period.

### (B) Goods having a tendency of being purchased together with other goods

In this view, goods are extracted as specific goods having a tendency of being purchased together with other goods or a combination of goods to be purchased together, by analyzing the combination of simultaneously purchased goods on a customer-by-customer basis from the large amount of sales performance data arranged in a time series manner. (C) Goods having a tendency of being purchased on a single-item basis

In this view, goods are extracted from the large amount of sales performance data arranged in a time series manner.

In the views (B) and (C), from the goods purchase performance and the goods browsed performance in the store and on the website executing the electronic transaction, the customer information, the goods information, etc., for example, the sales growth rate is analyzed by aggregating the numbers of sold goods on a goods-by-goods basis, the page view growth rate is analyzed by counting views of detail pages of goods, and alternatively, the single-item purchase rate, the repeat purchase rate of certain goods, the simultaneous purchase rate and the like are analyzed, thereby allowing determination that goods having such a numerical value of at least certain value are goods having a specific tendency. The determined goods, with identifiers representing the tendencies and degrees and with rank values, are recorded and managed in the goods management DB or in the stock goods management tables for the respective nearby bases, the tables having been extracted from the goods management DB.

The logic determinations exemplified in (A) to (C) described above are not always executed in a fixed view. The determinations can be appropriately made according to an alternative logic only if the logic includes an analysis extraction reference that is created from the sales performance data in the past and the like and is along each of parameters (various items) of the stock candidate goods.

Automatic goods extraction 744 performs an automatic goods extraction process based on the created extraction logic. The automatically extracted group of goods is stored, as stock candidate goods, in the stock candidate goods DB and table 750.

Next, referring to Figures 8 and 9, an example of a process by the customer for registering goods intended to be stocked is described in detail. Figure 8 is a flowchart of a stock goods registration process and update process in the goods shipment management system according to one embodiment of the present invention. Figure 9 illustrates a display example on the customer terminal in the goods shipment management system according to one embodiment of the present invention. The process example shown in Figure 8 does not disturb the registration request process and/or the automatic registration process shown in Figure 6, but is an example of a process that can be executed in parallel or alternatively.

The process is started in step S801 in Figure 8, and then the processing proceeds to step S802, in which in-stock stock candidate goods are captured from the stock candidate goods DB and table 750 to the front system 710.

Next, the processing proceeds to step S803, in which the goods recommendation logic 711 is activated in the front system 710 to distribute the in-stock stock candidate goods information to the user terminal, thereby presenting and recommending such candidate goods. Step S804 stands by for presence or absence of stock goods narrowing-down request, and a registration request, which are to be issued from the customer on the user terminal. If No in step S804, the processing proceeds to step S803 and this flow is finished (or the processing may return to step S804 in a state of standing by a request). If Yes in this step, the processing proceeds to step S805, in which the stock candidate goods are narrowed down on the basis of the registration request information on the customer's request, as required, and then in step S806, the process of registering the stock candidate goods requested by the customer is performed. In step S807, the stock candidate goods DB and table 750 are updated on the basis of the goods intended to be stocked registered based on the request issued by the customer, and this flow is finished (step S808).

Figure 9 illustrates a display example on the information processing apparatus (user or customer terminal) in the goods shipment management system according to one embodiment of the present invention. In this diagram, on a display 920 provided on a housing 910 of a terminal 900, a stock candidate goods list 930 exemplified with reference to Figure 8 is displayed together with a message "List of in-stock stock candidate goods (total xxx)". In the list 930, information provided about goods A is described. As for goods A, its accompanying goods image 931 and goods name 932 are presented, and a usual price and a sales price 933 are also presented. Granted points 934 at the time of purchase are also presented.

A register button 935 is provided so that when the customer intends to register the goods A as stock goods for the customer, the customer can register the goods as "My Stock". By pressing a button 921 on which "To My Stock" is indicated in this diagram, the screen transitions to a confirmation screen, not shown, where the goods information registered by the customer in "My Stock" can be confirmed (although not shown, the My stock confirmation screen may be provided with an edit button for switching active and non-active registration states and for cancelling (removing) the registration, and the like).

In Figure 9, a situation can be confirmed where information on goods B and C is also provided in the same manner as that on goods A.

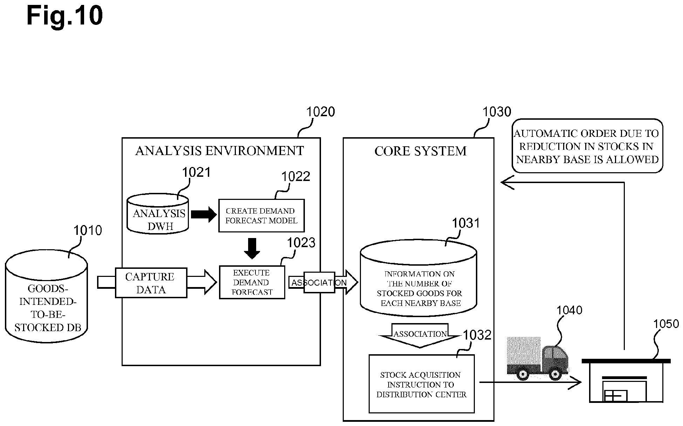

As described above, in an electronic transaction in the goods shipment management system according to one embodiment of the present invention, confirmation can be made by receiving presentation of in-stock stock candidate goods on the website 702 for the customer terminal and/or on the terminal application 703, such as of the customer terminal, and goods requested to be stocked in the nearby base among the confirmed goods can be selected/registered/edited; this point is a characteristic of the present invention. A scheme of securing the stock goods in the nearby base is described later with reference to Figure 10.

Figure 10 illustrates an analysis and distribution model in the goods shipment management system according to one embodiment of the present invention. In particular, the scheme of securing the stock goods in the nearby base is clarified through description with reference to this diagram. The scheme of securing the stock goods in the nearby base includes the following three steps, in a roughly classified manner.

### (STEP 1)

On the basis of the information on goods intended to be stocked for each nearby base, the number of stocked goods for each nearby base is estimated. Specifically, a demand forecast model for estimating the number of in-stock stocked goods to be secured in each nearby base is created from the data, such as the purchase performance in the past, the customer information, and the goods information, and then the number of stocked goods on a goods-by-goods basis is estimated (the number of stocked goods is also called the number of regular goods; the number of regular goods is also regarded as the required minimum number of goods to be always stocked in the nearby base).

### (STEP 2)

When the number falls below the number of stocked goods (the number of regular goods) estimated in STEP 1 described above, an order is automatically placed from the nearby base to the core system to restock the inventory.

### (STEP 3)

The core system manages the number of regular goods for each item of stock goods and each nearby base estimated in STEP 1, processes the automatic order placed in STEP 2, as required, and instructs the distribution center to transport (stock acquisition) the stock goods to the nearby base as needed.

In Figure 10, the scheme of securing the stock goods in the nearby base is achieved by a goods-intended-to-be-stocked database 1010 where information on a group of goods intended to be stocked collected from the customers is accumulated, an analysis environment 1020, and a core system 1030 (also including feedback from the base terminal in the nearby base, as required).

In this diagram, the information on a group of goods intended to be stocked is captured from the goods-intended-to-be-stocked database 1010 into the analysis environment 1020, and the demand forecast model is created based on an analysis data warehouse 1021, in the analysis environment 1020 (1022). Based on the information and model, the demand forecast is executed (1023), forecast information is transmitted to the core system 1030, and association is made therewith in the core system 1030.

In the core system 1030, in consideration of the demand forecast information transmitted from the analysis environment 1020, a table 1031 of information on the number of stocked goods for each nearby base is checked, and updated as required (for example, the table 1031 of information on the number of stocked goods is included in the stock goods database for each nearby base, or is created derivatively as needed).

Next, in the core system 1030, based on the updated table 1031 of information on the number of stocked goods, stock acquisition instructions (1032) about the target goods are transmitted to the distribution centers 11 to 13 (the nearby bases where acquisition is to be made is instructed for each item of target goods). Although not shown in this diagram, the instructed distribution centers 11 to 13 deliver the target goods (1040) to the nearby base 1050 for stock acquisition.

In this case, in one embodiment of the present invention, is should be noted that the number of goods subjected to stock acquisition is estimated to be slightly larger than the number of goods intended to be stocked recorded in the goods-intended-to-be-stocked database 1010. Specifically, if the total number of goods intended to be stocked in a certain nearby base is 500, the number of stocked goods that the core system 1030 causes the distribution center to provide for acquisition for the nearby base is adjusted so that the number of stocked goods in the nearby base can exceed 500 (for example, adjusted to be larger by a several percent).

Meanwhile, in the nearby base 1050, transition of increase and reduction in individual stock goods is managed. It may be configured so that for the stock goods whose number falls below the number of regular goods owing to inventory reduction, individual orders are automatically placed to the core system.

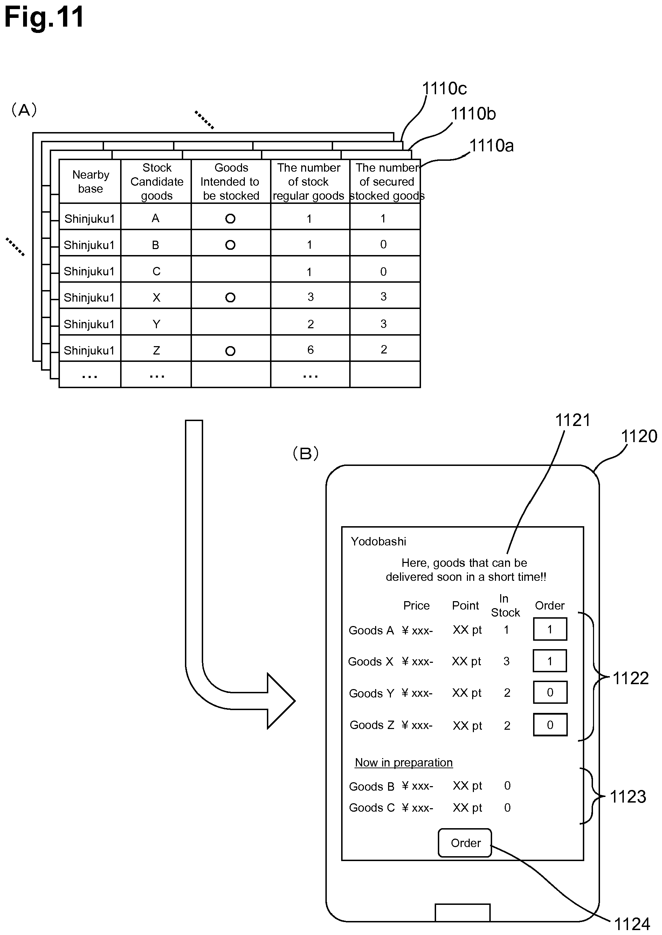

Figure 11 shows data table example derived and created from the stock candidate goods database, the goods-intended-to-be-stocked database, the customer management database, the goods management database, the stock management database and the like in the goods shipment management system according to one embodiment of the present invention ((A) of this diagram), and a situation where information is provided on the customer terminal (screen) on the basis of this table ((B) of this diagram).

Figure 11(A) exemplifies tables 1110a to 1110c where the relationships between the stock candidate goods, the goods to be stocked, the number of stock regular goods, the number of secured stocked goods are arranged for each nearby base (for each nearby base and for each customer, if further required) (in (A) of this diagram, for example, the table 1110a is assumed as a table arranged for a certain customer in the nearby area of the nearby base "Shinjuku 1"). In table 1110a, stock candidate goods A, B, C, X, Y and Z registered in the nearby base "Shinjuku 1", are registered. The table stores the presence or absence of stock intention requested by the customer for each item of stock candidate goods, the number of stock regular goods calculated based on the demand forecast model and the number of goods intended to be stocked requested by the customer, and the number of stocked goods secured in the nearby base at the time of being referred to from the goods management database, the stock management database and the like.

For example, in the table 1110a, it is recorded that the stock request by the customer is present for the stock candidate goods A, B, X and Z (flags are on with symbols "O" in (A) of this diagram). The number of stock regular goods for the stock candidate goods A is set to "1", while the stocked goods just as many as "1" are secured in this nearby base.

In such a situation, information example displayed on the customer terminal with a customer residence in the nearby area of the nearby base "Shinjuku 1" being adopted as the address, is shown in Figure 11(B). In (B) of this diagram, on the screen of the customer terminal 1120, in the group of stock candidate goods (A, B, C, X, Y, Z, ...) extracted for the nearby base "Shinjuku 1", among the goods A, B, X and Z that are requested to be stocked and are registered, the goods A, X and Z whose number of secured stocked goods is one or more, and the goods Y picked up through automatic extraction, not shown, (the goods also satisfy the condition that the number of secured stocked goods is one or more) are displayed in a presentation field 1122, accompanied by a message 1121 "Here, goods that can be delivered soon in a short time!!".

For example, the goods name (and goods images if required), the price, the granted points at the time of purchase, the number of stocked goods, for the stock goods that can be delivered to the customer in a short time period, are displayed in the presentation field 1122. Furthermore, the number of orders (the initial value is zero; the setting value that can be operated to be increased and reduced by the customer or user) is also displayed. In this diagram, for example, one order is placed for each item of the goods A and B (this state is a temporary state until an order button 1124 described later is pressed).

In a presentation field 1123, the goods B for which a stock request is issued by the customer and whose number of stocked goods is zero, and the goods C picked up through automatic extraction, not shown, (note that the number of secured stocked goods is zero) are presented, accompanied by a message "Now in preparation".

The order button 1124 is a button configured such that when the number of orders for each item of goods is set and the button is pressed, a process of procedures of ordering the goods whose number of orders is set to one or more is executed.

In the one embodiment described with reference to Figure 11, as described above, among the goods to be stocked having been selected and registered by the customer, only the stocked goods secured in the nearby base are introduced and presented as goods that can be ordered; this point is a characteristic of the present invention.

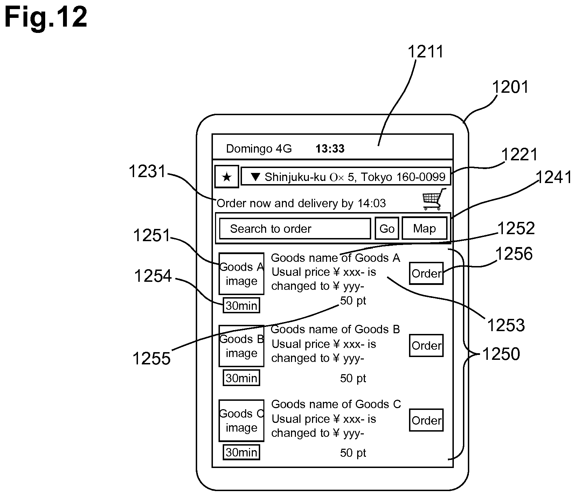

Figures 12 to 14 illustrate display examples on the information processing apparatus (user or customer terminal) in the goods shipment management system according to one embodiment of the present invention. These examples are for exemplifying variations of schemes of receiving an order of the stock goods from the customer according to one embodiment of the present invention. These order receiving schemes can guide the goods and receive an order at various timings on the website 702 for the customer terminal and on the screen of the terminal application 703, such as the customer terminal. Examples of such scenes include the following (S1) to (S5) and the like.

(S1) When the customer accesses the website for the customer terminal or activates the application on the customer terminal, the goods are introduced and an order is received. (S2) When the customer intends to purchase the goods on the website for the customer terminal or the terminal, such as the customer terminal, goods are introduced accompanied by a message "Goods delivered together soon" and an order is received. (S3) The behavior history of the customer (the page views, purchase pattern, etc.) is analyzed; when a certain behavior reference is satisfied, target stock goods are introduced using a notification function of a smart phone application or the like, and an order is received. (S4) During delivery of goods to the customer, goods are guided with an indication that the goods can be delivered together, and an additional order is received. (S5) During redelivery after unsuccessful goods delivery due to absence, goods are guided with an indication that the goods can be delivered together, and an additional order is received.

Figure 12 shows a screen example of the customer terminal configured to introduce the stock goods and allows the customer to place an order. In this diagram, on the screen of the customer terminal 1201, a header 1211 including a current time indication, a display field 1221 displaying the current address and the current place, a message 1231 "Delivery by 14:03 upon immediate order", and a search field 1241 are displayed, and a list of goods that can be delivered to the customer residence within a short time period (e.g., 30 minutes, or one hour) is displayed in a goods display field 1250. In this diagram, the goods A to C are displayed. However, the display is not limited thereto. More goods concerned can be presented through scroll means and page feeding means, not shown. The goods can be narrowed down through a search keyword or the like into the search field 1241 on the basis of desired goods classification and goods category.

The content of each item of goods displayed in the goods display field 1250 is exemplified; for the goods A, the goods image and the goods name 1252 are presented, while the usual price and the sales price 1253 are also presented. Furthermore, an estimated arrival time 1254 in a case where the goods A is immediately ordered is displayed. Granted points 1255 at the time of purchase are also presented.

If the customer intends to order the goods A, pressing of an order button 1256 on the screen can cause transition to an order procedure screen, not shown.

In Figure 12, a situation can be confirmed where information on goods B and C is also provided in the same manner as that on goods A.

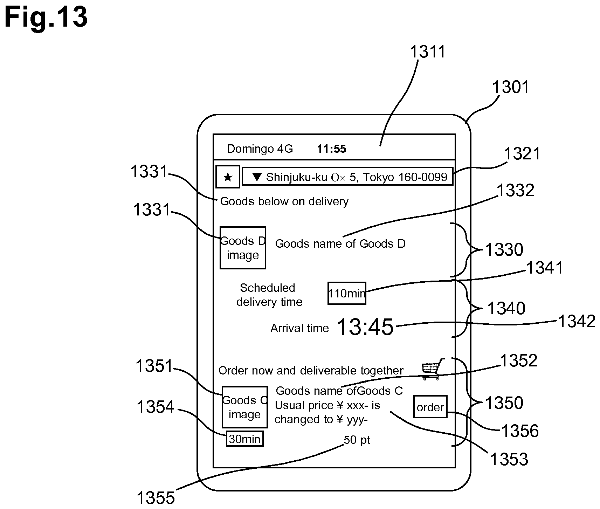

Figure 13 shows a screen example of the customer terminal configured such that during delivery of the goods to the customer, goods guidance is provided on the stock goods as goods that can be delivered together, and the customer's additional order can be placed. In this diagram, on the screen of the customer terminal 1301, a header 1311 including a current time indication, a display field 1321 displaying the current address and the current place of the customer, and a message 1325 "This item is on delivery" are displayed, and the goods D currently on delivery is displayed in the goods display field 1330.

In the goods display field 1330, for example, the goods image 1331 of the goods D and the goods name 1332 are presented. In the remarks field 1340 therebelow, the scheduled delivery time 1341 of the goods D, and the estimated arrival time 1342 are displayed.

Furthermore, referring to Figure 13, in the field below the remarks field 1340, that is, in the goods display field 1350, a list of goods that can be delivered to the customer residence in a short time period (e.g., 30 minutes or one hour) in a case where an order is placed at the current time (as of 11:55 when the screen in this diagram is displayed) is displayed.

The content of each item of goods displayed in the goods display field 1350 is analogous to the content of the goods displayed in the goods display field 1250 described with reference to Figure 12. For confirmation, for example, the goods image 1351 of the goods C is presented accompanied by the goods name 1352, while the usual price and the sales price 1353 are also presented. Furthermore, an estimated arrival time 1354 in a case where the goods C is immediately ordered is displayed. Granted points 1355 at the time of purchase are also presented.

If the customer intends to order the goods A, pressing of an order button 1356 on the screen can cause transition to an order procedure screen, not shown.

Only the goods C is displayed in the goods display field 1350. However, the present invention is not limited thereto. More goods concerned can be presented through scroll means and page feeding means, not shown. The goods can be narrowed down, through inputting a search keyword or the like in a search field that is not shown in this diagram, on the basis of desired goods classification and goods category.

Through a transition button, not shown, transition may be made from the screen shown in Figure 13 to the screen shown in Figure 12.

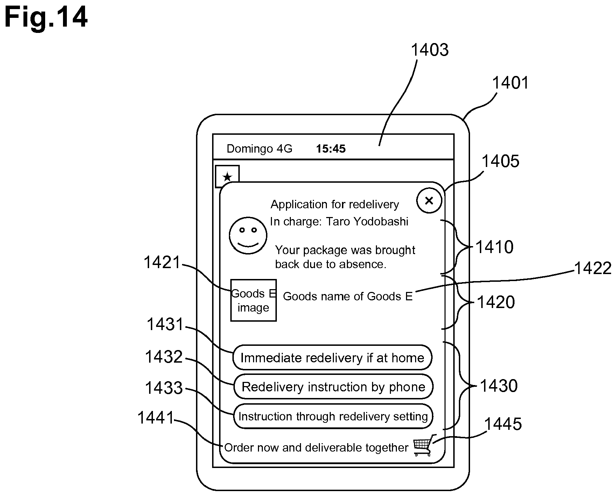

Figure 14 shows a screen example of the customer terminal configured such that at the time of a redelivery application after unsuccessful goods delivery to the customer due to absence, the stock goods are introduced as goods that can be delivered together, and the customer's additional order can be placed. In this diagram, on the screen of the customer terminal 1401, a header 1403 including the current time indication is displayed. A redelivery application screen 1405 is displayed in a form of being popped up on the screen including the header 1403.

The redelivery application screen 1405 has, for example, a guidance field 1410 that includes the name of a deliverer in charge, and a message "Your package was brought back due to absence." A goods display field 1420 for the goods to be delivered is disposed therebelow. In the goods display field 1420, for example, a goods image 1421 of the goods E is presented accompanied by the goods name 1422.

In Figure 14, a redelivery instruction field 1430 is disposed below the goods display field 1420. In this field 1430, three instruction buttons 1431 to 1433 are disposed. Specifically, the instruction button 1431 is an instruction button for issuing an immediate redelivery instruction because the customer is currently present. The instruction button 1432 is an instruction button for issuing a redelivery instruction through phone.

The instruction button 1433 is an instruction button for issuing a redelivery instruction in conformity with redelivery setting (what is set on the screen). For example, pressing of this button can cause transition to redelivery setting screen, not shown.

In the bottom field in Figure 14, a guidance 1441 of a list of goods that can be delivered together to the customer residence at the time of redelivery in a short time period (e.g., 30 minutes or one hour) in a case where an order is placed at the current time (as of 15:45 when the screen in this diagram is displayed) is displayed. In this diagram, through a scroll button, not shown, a goods list (e.g., the list as shown in Figure 12) can be presented. Alternatively, pressing of a screen transition icon 1445 can cause transition to the screen shown in Figure 12.

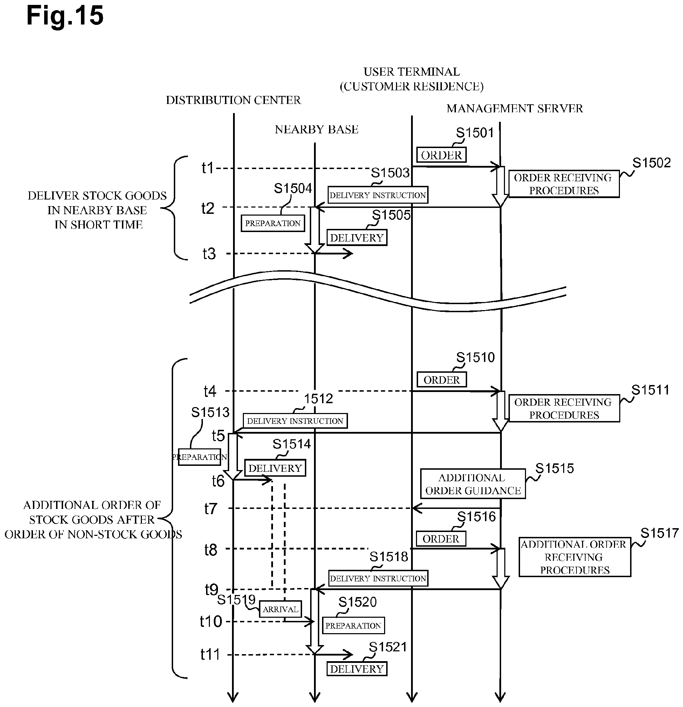

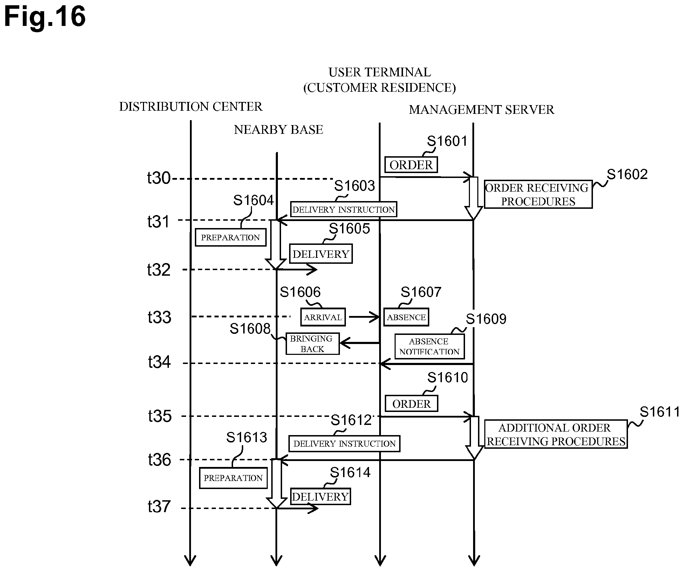

Figures 15 and 16 illustrate processing operation flows in the goods shipment management system according to one embodiment of the present invention. The operation flows shown in Figures 15 and 16 exemplify variations of order/delivery that can be achieved by constructing "nearby bases", which are specific to one embodiment of the present invention. Figure 15 shows a situation where stock goods stocked in the nearby base can be delivered in a short time period (a flow from time t1 to time t3 in this diagram), and a situation where stock goods stocked in the nearby base are ordered at any time until non-stock goods ordered by the customer pass through the nearby base including the customer residence as the nearby area after the goods are shipped from the distribution center, and the stock goods are delivered together with the previously ordered non-stock goods (a flow from time t4 to time t11 in this diagram).

Figure 16 further exemplifies a situation where during redelivery after unsuccessful delivery from the nearby base due to absence or the like, an additional order of another item of stock goods can be accepted and both the items of the goods can be delivered together (a flow after time t33 in this diagram).

### [Scene of delivery of stock goods in nearby base in short time period]

At time t1 in Figure 15, when an order of stock goods is placed from the user terminal (customer terminal) in the customer residence to the management server 21 of the goods shipment management system (step S1501), the management server 21 performs order receiving procedures (step S1502), and issues an instruction of delivering the ordered stock goods to the base terminal in the nearby base at time t2 (step S1503).

The base terminal in the nearby base having received the delivery instruction issues a shipment preparing instruction, and the shipment is prepared in the nearby base from time t2 to time t3 (step S1504), and the ordered stock goods are delivered to the customer residence at time t3 (S1505).

### [Scene of receiving additional order of stock goods after order of non-stock goods]

At time t4 in Figure 15, an order of non-stock goods is issued from the user terminal (customer terminal) in the customer residence to the management server 21 of the goods shipment management system (step S1510). In this embodiment, the non-stock goods are often delivered from the distribution center to the customer residence via the nearby base. The goods ordered this time are also scheduled to be shipped from the distribution center. The order receiving procedures are performed by the management server 21 from time t4 to time t5 (step S1511), and at time t5, an instruction of delivering the ordered non-stock goods is issued to the base terminal in the distribution center (step S1512).

The base terminal in the distribution center, which has received the delivery instruction, issues a shipment preparing instruction, and the shipment is prepared in the distribution center from time t5 to time t6 (step S1513), and the ordered non-stock goods are delivered to the nearby base at time t6 (S1514).

The non-stock goods shipped from the distribution center to the nearby base at time t6 arrive at time t10 as shown in this diagram. During this period, the following processing operation is executed.

First, at time t7, the management server 21 notifies the user terminal (customer terminal) that the previously ordered non-stock goods have been shipped, and transmits a guidance of an additional order (step S1515). Preferably, this guidance includes the guidance described with reference to Figure 13.

Next, at time t8, an additional order of the stock goods is placed from the user terminal (customer terminal) to the management server 21 through the guidance screen described with reference to Figure 13 (step S1516). The management server 21 performs additional order receiving procedures (step S1517), and issues an instruction of delivering the additionally ordered stock goods to the base terminal in the nearby base at time t9 (step S1518).

At this time, the non-stock goods shipped from the distribution center at time t6 does not reach the nearby base, and in the nearby base, from time t9 to time t11, preparation for shipping the stock goods subjected to the delivery instruction is performed (step S1520).

At time t10 during the preparation for shipping the stock goods in the nearby base, the non-stock goods shipped from the distribution center arrives at the nearby base (step S1519). In the nearby base, an operation of bundling the non-stock goods having arrived and the stock goods is performed.

Lastly, at time t11, the bundled non-stock goods and the stock goods are shipped from the nearby base to the customer residence (step S1521).

### [Scene of receiving additional order of stock goods during redelivery from nearby base]

At time t30 in Figure 16, when an order of stock goods is placed from the user terminal (customer terminal) in the customer residence to the management server 21 of the goods shipment management system (step S1601), the management server 21 performs order receiving procedures (step S1602), and issues an instruction of delivering the ordered stock goods to the base terminal in the nearby base at time t31 (step S1603).

The base terminal in the nearby base having received the delivery instruction issues a shipment preparing instruction, and the shipment is prepared in the nearby base from time t31 to time t32 (step S1604), and the ordered stock goods are delivered to the customer residence at time t32 (S1605).

At time t33, the stock goods shipped from the nearby base reaches the customer residence (step S1606). However, since the customer is absent, an absence slip is put into the post or the like (step S1607), and the stock goods are temporarily brought back to the nearby base (step S1608).

At time t34, the management server 21 transmits, to the customer terminal, an absence notification accompanied by a guidance of an additional order (step S1609). Preferably, this guidance includes the guidance described with reference to Figure 14.

Next, at time t35, an additional order of other stock goods is placed from the user terminal (customer terminal) to the management server 21 through the guidance screen described with reference to Figure 14 (step S1610). The management server 21 performs additional order receiving procedures (step S1611), and issues an instruction of delivering the additionally ordered stock goods to the base terminal in the nearby base at time t36 (step S1612). By this time, the stock goods being brought back reaches the nearby base. In the nearby base, from time t36 to time t37, preparation for bundling and shipping the brought-back stock goods and the other stock goods ordered to be delivered through the additional order is performed (step S1613).

At time t37, the bundled stock goods are shipped from the nearby base to the customer residence (step S1614).

To achieve the order/delivery variations described with reference to Figures 15 and 16, on the core system, the number of stocked goods on an item-by-item basis in each base, the delivery time between the bases, and the delivery time to the customer residence are managed, recalculated as required, and subjected to update control. The current position of the goods being tracked after shipment from the base and being delivered is updated and managed. The delivery scheduled time is recalculated according to the additional order and change in the content of the order, and the time is appropriately notified to the customer terminal and the mobile terminal of the deliverer.

### [Another embodiment pertaining to user terminal operation]

Next, an operation and a display example on the user terminal in the goods shipment management system according to another embodiment of the present invention are described. The embodiment described below can operate to have an independent operation and display function for the user terminal, without limitation due to the characteristics of the goods list display and selection provided by the management server in the goods shipment management system described above and without limitation due to the unique configuration of the goods shipment management system of the present invention. Note that in the following description, to facilitate understanding the present invention, an operation example of the user terminal in the aforementioned goods shipment management system is described.

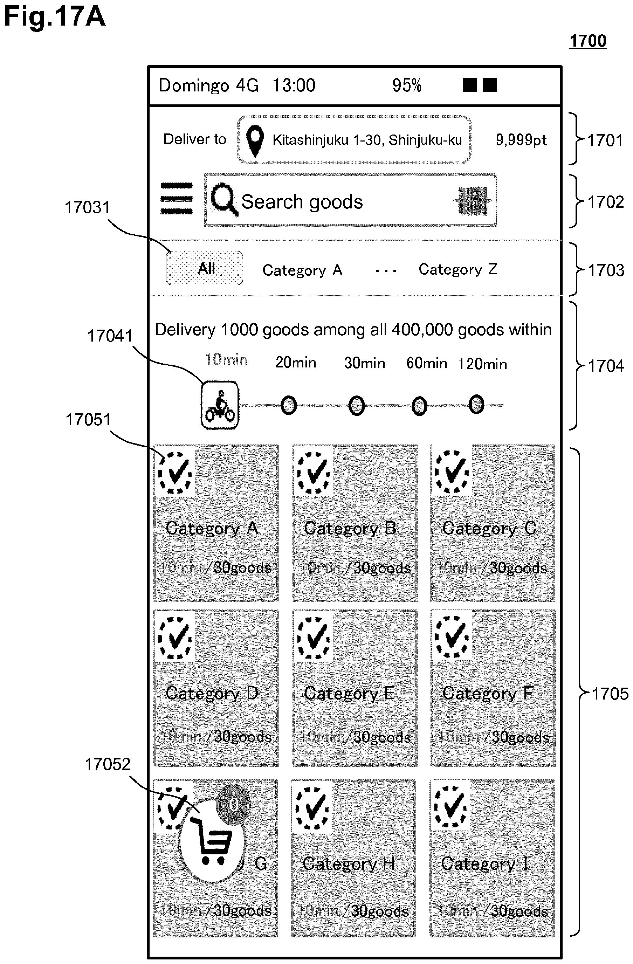

Figure 17A shows a display example of a list of goods deliverable in a predetermined time period on the user terminal, and characteristically shows situations where the predetermined time period itself can be changed through a slider interface.

In Figure 17A, in a display field 1701, a designated (or already registered) delivery place display, and accumulated points (9,999 pt in this diagram) are displayed. A search field 1702 and a category designation field 1703 are displayed therebelow. As shown in this diagram, when an "All" button in the category designation field 1703 is pressed, all the categories are designated (i.e., narrowing down based on a category is not performed).

An operation and display field 1704 in Figure 17A is a characteristic part. In the operation and display field 1704, the number of goods narrowed down by the search field 1702 and the category designation field 1703, and the time in which the goods can be delivered are displayed in an operable manner. That is, in an upper part of this field, for example, a fact that "All 400,000" goods include 1,000 goods deliverable within a predetermined time period (10 minutes) is displayed.

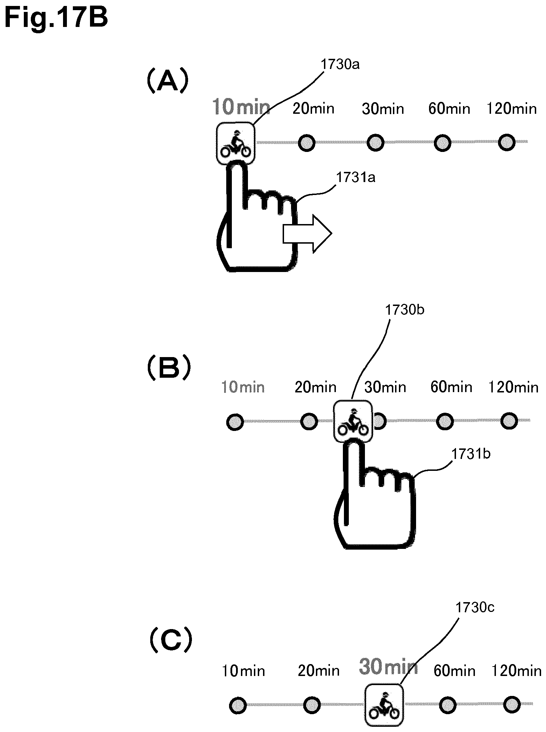

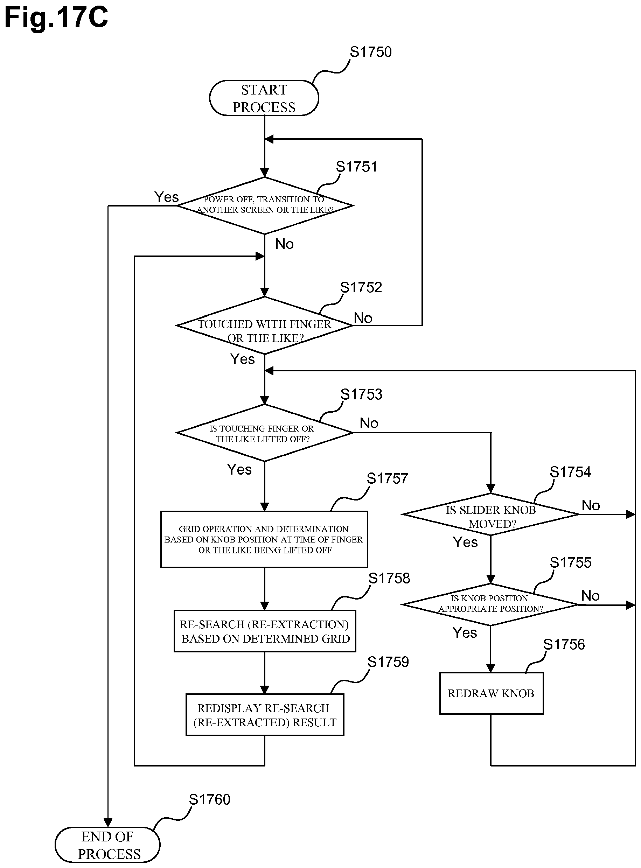

In a lower part of this field 1704, the slider interface allowing the designation of the deliverable time to be changed is displayed. A knob 17041 of this interface is configured to be capable of changing a designation condition through a direct operation with a finger of the user or the like (the detailed operation is described later with reference to Figures 17B and 17C). In this field 1704, the knob 17041 is at the position of "(within) 10 min." and serves as an interface for designating narrowing down for goods deliverable within ten minutes.

That is, as described above, the other embodiment of the present invention is characterized by capabilities of simultaneous narrowing down of three types at the maximum (narrowing down by AND conditions), i.e., (1) narrowing down based on a keyword or the like in the search field 1702, (2) narrowing down based on a category in the category designation field 1703, and (3) narrowing down based on the deliverable time through the slider interface in the operation and display field 1704. It is a matter of course that the narrowing down of these three types are not always required to be used. Narrowing down without use of the search field 1702, but with the category designation field 1703 and the operation and display field 1704 or but with another combination is allowed. Alternatively, single narrowing down only with the search field 1702 is also allowed.

In a search result display field 1705 in Figure 17A, a result of narrowing down according to the condition described above is displayed as the number of hits and the like on a category-by-category basis. In this diagram, all categories are designated. Consequently, both the numbers of hits and the deliverable time (10 min.) are displayed in the respective rectangular regions on a category-by-category basis (categories A to I are displayed on the screen). In an upper left part of the rectangular region for each category, a check button interface allowing switching between selected and not selected through a tap or the like is displayed. For example, a check button 17051 is for switching between states of the search results of a category A being selected or not selected.

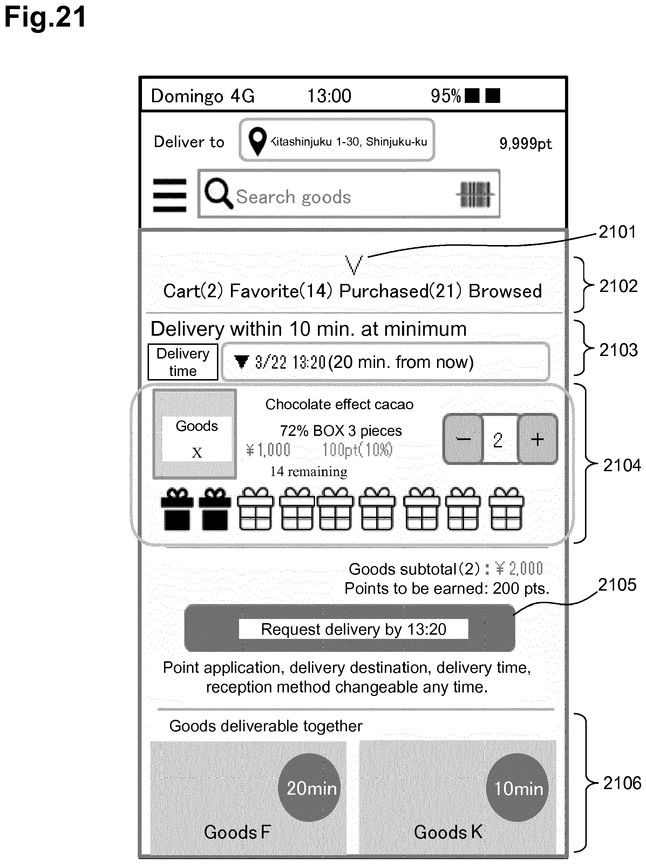

This diagram further shows a pressable cart icon 17052. The icon 17052 is not displayed at a specific position in a fixed manner, but is displayed in a floating manner instead, for example. It is configured such that double tapping of the cart icon 17052 and the like can confirm the goods intended to be purchased at the current time (the details and the like in the cart are described with reference to Figure 21).

At an upper right part of the cart icon 17052, for example, the number of goods stored in the cart by the customer at the current time can be displayed. The number of goods in the cart is zero in this diagram.

Results that cannot be displayed in the search result display field 1705 can be viewed through an operation to a scroll bar, not shown.

Figure 17B illustrates a guideline of operating the slider interface on the user terminal, and shows situations where (the knob of) the slider interface is operated in a time series manner from Figure 17B(A) to Figure 17B(C). In (A) to (C) of this diagram, 10, 20, 30, 60, and 120 min. are displayed as time indications on the interface, which serve as scale marks for an instruction for picking up a group of goods to be delivered in each time.

In Figure 17B(A), the knob 1730a is at the position of "10 min." on the slider interface. The knob 1730a is touched with the index finger of the right hand 1731a of the user to move in the right direction in the diagram (what is called drag movement).

The knob 1730a can be moved laterally on the slider after a touch until separation. Note that a range where the knob 1730a is movable on the slider is configured (typically, from the left end to the right end of the slider). If dragging beyond the range is tried, the knob 1730a cannot be moved.

Figure 17B(B) shows a state where the finger 1731b is slid in the right direction from the state of Figure 17B(A) without being lifted off (the knob 1730b on) the screen. The finger is slid to a position slightly before (a little left of) the scale mark position of 30 min. In Figure 17B(C), at the position in this diagram, the index finger of the right hand 1731b is lifted off the knob 1730b.

Figure 17B(C) illustrates a state immediately after the index finger is lifted off the knob 1730b in the state of Figure 17B(B). In (C) of this diagram, the knob 1730c is automatically pulled to the nearer scale mark (30 min.) between the left and right scale marks (i.e., the scale mark of 20 min. and the scale mark of 30 min.) (normalized to a grid position, i.e., the scale mark), and is settled at the position of the scale mark of 30 min.

At this time, one embodiment of the present invention is configured so that re-extraction (re-search) of the goods immediately deliverable within 30 min. can be executed (the details are described with reference to Figure 17C).

Figure 17C is a flowchart illustrating, in detail, processes and the like to be executed by the system including the user terminal and the management server through an operation and the like on (the display screen of) the user terminal described with reference to Figures 17A and 17B.

In step S1750, which is the start of the description of this flow, for example, the user terminal is activated (application software is also activated as required), and a screen shown in Figure 17A is displayed. At this time, on the screen capable of multi-touch detection, detection of whether there is a touch of an object (a button, a knob of a slider or the like) on the screen as an event is performed at a frequency ranging from several times to several tens of times per second. One event thereamong is determination of whether there is power-off (or finish of application) or transition to another screen, the determination being shown in step S1751.

If Yes in step S1751, this operation flow is finished (step S1760). If No, the processing proceeds to step S1752, in which it is determined whether the screen of the user terminal is touched or not (one type of event detection).

If there is no touch with a finger or not in step S1752 (No), the processing returns to step S1751. If there is a touch with a finger or not (Yes), the processing proceeds to step S1753.

In step S1753, it is assumed that the touch with the finger or the like in step S1752 continues, and it is determined whether the touching finger or the like is lifted off or the like (one type of event detection). If No in step S1753, the slider operation described with reference to (A) and (B) of Figure 17B is achieved (described later with reference to steps S1754 to S1756). If Yes in step S1753, the completion of movement of the slider knob and the re-search (re-extraction) described with reference to Figure 17B(C) are executed (described later with reference to steps S1757 to S1759).

In step S1754 of Figure 17C, it is determined whether or not the slider knob (e.g., the knob 17041 in Figure 17A, the knobs 1730a to 1730b in Figure 17B, etc.) is moved with the touching finger or the like (for example, it is achieved by periodically detecting the operation of the finger or the like in contact).

If No in step S1754, the processing returns to step S1753. If Yes, the processing proceeds to step S1755, in which it is determined whether (the position of the finger or the like dragging) the knob position is at an appropriate position or not. For example, if (the position of the finger or the like dragging) the knob position is largely deviating from the left or right of the slider (No in step S1755), the knob position is required to be left at the end of the slider, and the processing returns to step S1753. If Yes in step S1755, the processing proceeds to step S1756.

In step S1756, the slider knob is redrawn so as to be aligned with the position of the slightly moved finger or the like, and the processing returns to step S1753. Steps S1753 to S756 are executed at several times to several tens of times per second. Accordingly, when the user drags the slider knob with the finger or the like, they can sense as if they were moving the knob with their own finger or the like.

In step S1757, the position of the slider knob at the time of the finger or the like of the user being lifted off (the screen of) the user terminal is obtained, and a grid operation through normalization of the knob position is performed to finalize (determine) the knob position. Specifically, when the knob position is on the slider, it is determined which scale mark position is nearer between immediate right and left ones, and the nearer scale mark position is adopted as the position of the knob. When the knob position adheres to any one of the right and left ends of the slider (i.e., the knob is intended to be dragged with the finger beyond the range of the slider), the end (it must be the minimum or maximum scale mark position) is determined as the knob position.

Next, in step S1758, based on the grid determined as the settled position of the slider knob immediately after the finger or the like is lifted off the screen (the scale mark positions of 10 min., 20 min., 30 min., 60 min., and 120 min. serve as grids in 1704 of Figure 17A), the user terminal issues a request of re-searching and re-extracting the goods to the management server in the system. For example, when the slider knob originally at the scale mark position of 10 min. is moved to the scale mark position of 30 min., a request or a query in addition to the given condition is transmitted to the management server so as to re-extract the goods deliverable within 30 minutes.

The management server receives the request or the query, this server executes a re-extraction or re-search process based on the content of the request or the query, and returns a part or all of hit goods information to the user terminal.

In step S1759, based on the part or all of the reextracted or re-calculated result received by the user terminal from the management server, information on the part or all thereof is redisplayed on the screen of the user terminal, and the processing returns to step S1752.

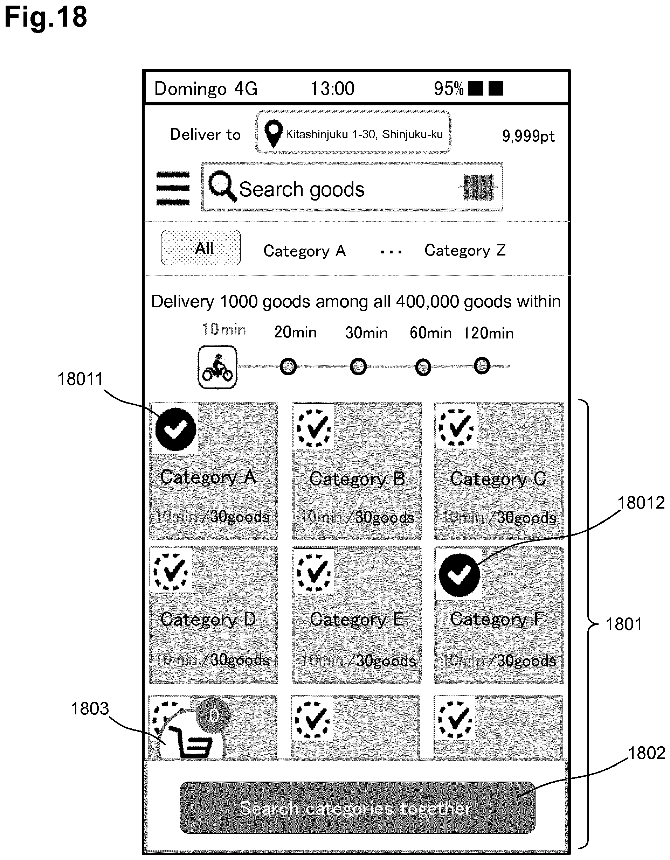

Next, referring to Figures 18 to 21, a goods narrowing-down operation and display variations in the user terminal according to another embodiment of the present invention are described.

Figure 18 shows the variation of selecting multiple categories and performing the goods narrowing-down operation. When check operations for multiple categories (specifically, as shown in this diagram, the categories A and F are selected by turning on check buttons 18011 and 18012) are applied to the number of hits and the deliverable time (10 min.) on a category-by-category basis displayed on the search result display field 1801 on the screen shown in this diagram, control is performed so that a search (or re-search) start button 1802 to which a title "Search categories together" is added can appear as shown in the lowermost field in this diagram, and the search or re-search is executed for the categories A and F selected by pressing this button 1802 (this process is an interaction between the user terminal and the management server even though the content itself of the request or query is different, and an interaction analogous to that of the process described with reference to steps S1758 to S1759 is executed).

Results that cannot be displayed in the search result display field 1801 can be viewed through an operation to a scroll bar, not shown.

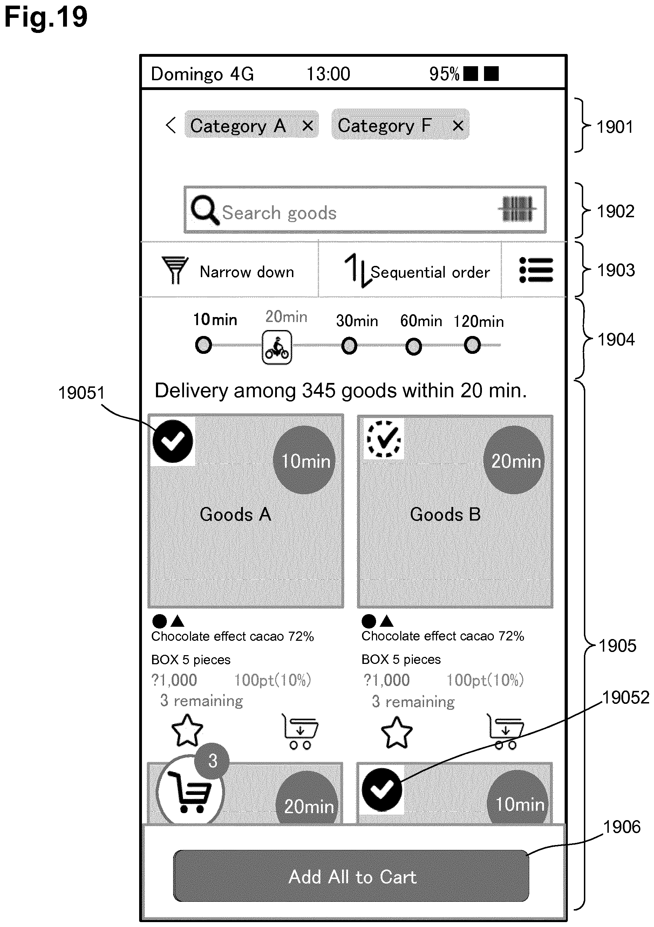

Figure 19 shows the variation of a further narrowing-down process and a goods selecting process for the narrowing-down process result described with reference to Figure 18.

On the screen shown in Figure 19, in a display field 1901, labels for the categories (A and F) selected by the narrowing-down operation described with reference to Figure 18 are displayed. When a symbol "×" displayed at the right end of each of the labels is touched or tapped, the categories corresponding to the labels are removed (at the same time, re-search or re-extraction may be immediately executed on the basis of a new condition due to the removal of the categories, and the result may be displayed).

In the search field 1902, any character string and the like can be input, and a search for a character string in the categories displayed on the labels in the display field 1901 can be executed. If no label is in the display field 1901, all the categories are to be searched.

As shown in Figure 19, in an operation menu field 1903, "Narrow down" icon at the left end, "Sequential order" icon at the center, and a display form switching icon at the right end are displayed.

Here, when "Narrow down" icon is tapped, a narrowing-down menu including category, price range, maker, and related words, can be displayed in a pull-down form (not shown in this diagram). The user is allowed to select an item in the pulled down menu, thereby enabling the user to perform a further narrowing-down process.

Here, when "Sequential order" icon is tapped, a rearrangement menu including price order, delivery time sequence, and recommendation order, can be displayed in a pull-down form (not shown in this diagram). The user is allowed to select an item in the pulled down menu, thereby enabling the user to perform a further narrowing-down process.

Tapping "display form switching" icon can switch search result display forms between a tile format (goods image icons are displayed in some cases) and a list format (a format allowing more goods information to be displayed in a limited screen region). In this diagram, the result is displayed in a search result display field 1905 in the tile format. The display format switching icon indicates that the format can be switched to the list format.

In 1904, the slider interface having already been described is displayed. This interface is configured so that the designation of the deliverable time is changeable. In this diagram, the knob disposed at the position of "10 min." in Figure 18 is moved to the position of "20 min." Accordingly, in the search result display field 1905, the goods deliverable within 20 min. are extracted from the categories A and F and displayed in addition to the goods deliverable within 10 min.

Results that cannot be displayed in the search result display field 1905 can be viewed through an operation to a scroll bar, not shown.

Furthermore, in the search result display field 1905, check button 19051 and the like allowing multiple goods to be selected are displayed. For example, as shown in this diagram, selecting (turning on) the check buttons 19051 and 19052 can select the goods A and D (only a part of the goods D is displayed in this diagram).

When multiple items of goods are selected in the search result display field 1905, a button 1906 for adding multiple items into the cart accompanying a title "Add All to Cart" can be displayed as shown in Figure 19. When this button 1906 is pressed, the items of goods selected at the time are comprehensively added to the cart.

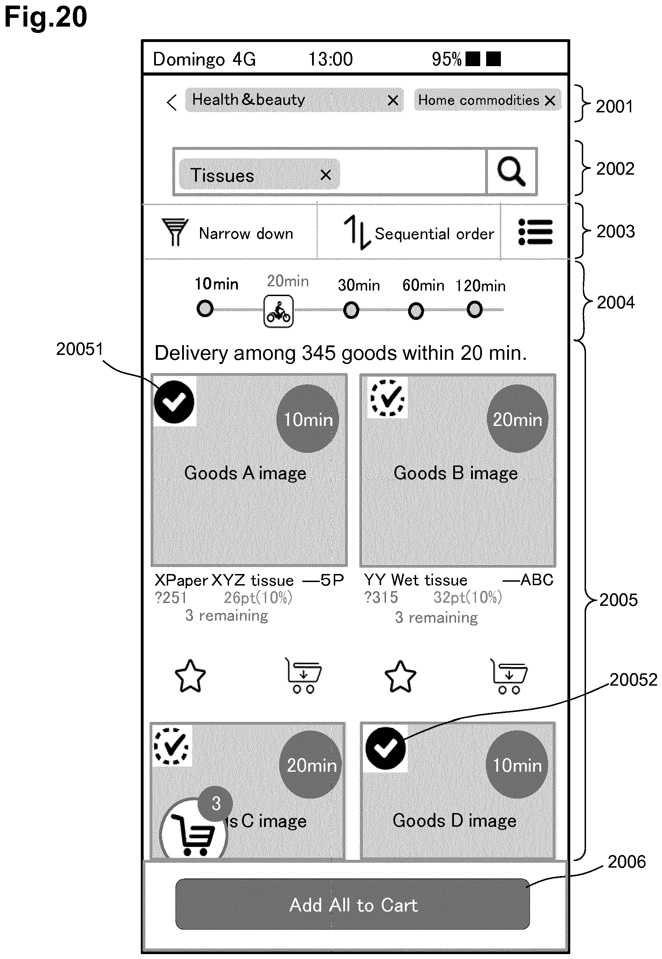

Figure 20 shows another variation different from that of the narrowing-down process described with reference to Figure 19. The difference from the narrowing-down process described with reference to Figure 19 is that a character string input in a search field 2002 can be adopted as an AND condition and the narrowing-down process is executed. What are denoted by reference numerals 2001, 2003, 2004, 2005, 2006, 20051 and 20052 shown in Figure 20 are respectively analogous to what are denoted by reference numerals 1901, 1903, 1904, 1905, 1906, 19051 and 19052 shown in Figure 19. Accordingly, the description thereof is omitted.

Figure 21 shows a screen example for referring to the content of goods added to the cart as shown in the cart icon 17052 shown in Figure 17A, for example (an analogous cart icon is displayed also in Figures 18 to 20) .

In Figure 21, reference numeral 2101 ("V"-shaped icon) denotes a button for closing, and is a button for closing the cart screen displayed in the floated manner. In a screen menu 2102, a display switching menu to a cart screen, a favorite screen, a purchase history, and a browsing history is displayed. As shown in this diagram, the initial display can be set to the cart screen. It is configured such that tapping the menu item for an intended display can switch the floating screen. A delivery time instruction menu 2103 is provided with a pull-down menu for allowing designation of any of time zones of and after the earliest delivery time in conformity with the preference of the customer (user). A quantity adjusting interface 2104 provides an interface for displaying individual pieces of information on the goods added to the cart and for allowing their quantities to be adjusted.

A delivery request button 2105 is a button for finalizing the order of the goods. In a goods display area 2106, the goods deliverable together with the order-finalized goods are displayed. All the goods concerned that cannot be displayed in the area 2106 can be verified through an operation to a scroll bar, not shown.

Based on the specific examples, the embodiments of the goods shipment management system and the like have thus been described above. Alternatively, the embodiments of the present invention may be exemplary embodiments not only of a method or a program for executing the system or the apparatus but also of a storage medium storing the program (e.g., an optical disk, a magnetooptical disk, a CD-ROM, a CD-R, a CD-RW, a magnetic tape, a hard disk, a memory card) and the like.

The embodiments of the program are not limited to application programs, such as object code to be complied by a compiler, and program code to be executed by an interpreter, but may be an embodiment of a program module to be implemented in an operating system.

Not all the processes of the program are necessarily executed on the CPU on a control board. Alternatively, a configuration may be adopted where some or all of the processes are executed by another processing unit (DPS or the like) implemented on an extension board added to the board or on an extension unit, as required.

All the constituent elements described in this Specification (including the scope of claims, the abstract and the drawings) and/or all the steps of all the methods or processes disclosed therein can be combined to achieve any of the combinations excluding mutually exclusive combinations.

The characteristics described in this Specification (including the scope of claims, the abstract and the drawings) can each be replaced with alternative characteristics operating for the same object, equivalent objects, or similar objects, unless clearly denied. Consequently, unless clearly denied, each of the disclosed characteristics is only an example of a comprehensive series of the same or equivalent characteristics.

Furthermore, the present invention is not limited to any of the specific configurations of the embodiments described above. The present invention is broadly applicable to all the novel characteristics described in this Specification (including the scope of claims, the abstract and the drawings) or combinations thereof, or all the aforementioned novel methods or processing steps, or combinations thereof.

### Reference Signs List

10 goods shipment management system (as a part of a distribution system)
11 to 13 Distribution center
14 to 16 Nearby base
141 to 142, 151 to 153, 162 to 165, 199 Customer residence
20 goods shipment management system
21 Management server
22 Tablet terminal (a mode of user terminal apparatus)
23 Mobile phone (a mode of user terminal apparatus)
24 to 26 PC (a mode of user terminal apparatus or base terminal)
27 to 28 POS terminal (a mode of base terminal or delivery mobile terminal)
37, 38 Communication line
39 Public line (dedicated line, Internet, etc.)

## Claims

1. A goods shipment management system, comprising a management server that manages shipment of goods to a plurality of nearby bases each based in a predetermined area allowing delivery from one or more distribution centers to a customer residence in the predetermined area in a predetermined time period, and shipment of goods from the nearby base to the customer residence, wherein the management server comprises a front end for performing an electronic transaction of the goods in response to an order from a customer terminal in the customer residence, and the goods shipment management system performs control and management such that certain items of the goods that can be delivered in the predetermined time period from the nearby base to the customer residence in the predetermined area when an order of any item of the goods is placed from the customer terminal via the front end are managed as stock goods and a predetermined number of items of the stock goods are stocked in the nearby base, remaining items of the goods other than the stock goods are managed as non-stock goods, and any item of the non-stock goods is delivered from the distribution center to the customer residence via the nearby base when an order of the item of non-stock goods is placed from the customer terminal via the front end.

2. The goods shipment management system according to claim 1, wherein the stock goods are determined by presenting a group of stock candidate goods extracted by the management server to the customer terminal, and by allowing a customer to perform selection and registration through the customer terminal.

3. The goods shipment management system according to claim 1 or 2, wherein the stock goods are managed for each customer and for each nearby base based in the predetermined area including the customer residence of the customer.

4. The goods shipment management system according to claim 3, wherein the stock goods managed for each customer can be edited by the customer.

5. The goods shipment management system according to any one of claims 2 to 4,
wherein the stock goods selected and registered by the customer are presented to the customer terminal during a shopping operation through the customer terminal.

6. The goods shipment management system according to any one of claims 2 to 5, wherein when an order of the non-stock goods is placed from the customer terminal via the front end, the stock goods selected and registered by the customer are presented on the customer terminal until the non-stock goods are delivered from the distribution center to the nearby base.

7. A computer program executed on a goods shipment management system comprising a management server that manages shipment of goods to a plurality of nearby bases each based in a predetermined area allowing delivery from one or more distribution centers to a customer residence in the predetermined area in a predetermined time period, and shipment of goods from the nearby base to the customer residence, wherein when the computer program is executed on the system, the computer program causes the management server to execute the steps of: performing an electronic transaction of the goods through a front end in response to an order from a customer terminal in the customer residence; managing certain items of the goods that can be delivered in the predetermined time period from the nearby base to the customer residence in the predetermined area when an order of any item of the goods is placed from the customer terminal via the front end, as stock goods, and stocking a predetermined number of items of the stock goods in the nearby base; managing remaining items of the goods other than the stock goods, as non-stock goods; and performing control and management such that any item of the non-stock goods is delivered from the distribution center to the customer residence via the nearby base when an order of the item of non-stock goods is placed from the customer terminal via the front end.

8. The program according to claim 7, wherein the stock goods are determined by presenting a group of stock candidate goods extracted by the management server to the customer terminal, and by allowing a customer to perform selection and registration through the customer terminal.

9. The program according to claim 7 or 8, wherein the stock goods are managed for each customer and for each nearby base based in the predetermined area including the customer residence of the customer.

10. The program according to claim 9, wherein the stock goods managed for each customer can be edited by the customer.

11. The program according to any one of claims 8 to 10, wherein the stock goods selected and registered by the customer are presented to the customer terminal during a shopping operation through the customer terminal.

12. The program according to any one of claims 8 to 11, wherein when an order of the non-stock goods is placed from the customer terminal via the front end, the stock goods selected and registered by the customer are presented on the customer terminal until the non-stock goods are delivered from the distribution center to the nearby base.
